# EUROPEAN PATENT SPECIFICATION

(11) **EP 1 648 237 B1**
(45) Date of publication and mention of the grant of the patent: **28.07.2010**
(21) Application number: 04752944.1
(22) Date of filing: 21.05.2004
(51) Int. Cl.: A21D 2/26, A21D 13/06

(54) **HIGH PROTEIN, REDUCED-CARBOHYDRATE BAKERY AND OTHER FOOD PRODUCTS**
BACKWAREN UND ANDERE NAHRUNGSMITTEL MIT HOHEM PROTEINGEHALT UND REDUZIERTEM KOHLENHYDRATGEHALT
PRODUIT DE BOULANGERIE ET AUTRES ALIMENTS RICHES EN PROTEINES ET PAUVRES EN GLUCIDES

(30) Priority: 15.07.2003 US 620019
(43) Date of publication of application: 26.04.2006
(73) Proprietor: MGP Ingredients Inc, Atchison, KS 66002-0130 (US)
(72) Inventor: MANINGAT, Clodualdo, C., Platte City, MO 64079 (US); DOHL, Christopher, T., Netawaka, KS 66516 (US); GAUL, Jennifer, A., Effingham, KS 66023 (US); STEMPIEN, Gregory, J., Atchison, KS 66002 (US); BASSI, Sukh, D., Atchison, KS 66002 (US); RANJAN, Shishir, Atchinson, KS 66002 (US); WOO, Kyungsoo, Shawnee, KS 66216 (US)
(74) Representative: Kudlek, Franz Thomas
(86) International application number: PCT/US2004/016022
(87) International publication number: WO 2005/016010

(56) References cited:
- EP-A2- 0 011 174
- WO-A1-03/49545
- US-A- 4 159 348
- US-A- 5 849 090
- US-A1- 2003 134 023
- US-A1- 2005 276 896
- US-B1- 6 221 418
- US-B1- 6 261 629
- US-B1- 6 432 458
- US-B1- 6 589 584

## Description

### BACKGROUND OF THE INVENTION

### FIELD OF THE INVENTION

The present invention generally pertains to improved bakery products (particularly wheat-containing bakery products and doughs) having higher protein and reduced carbohydrate contents when compared with similar, more traditional bakery products and doughs. Products according to the invention comprise a first protein source along with a second proteinaceous ingredient and, optionally, a quantity of resistant starch.

### DESCRIPTION OF THE PRIOR ART

The rise in popularity of high-protein diets has increased the demand for high-protein, and consequently, reduced carbohydrate substitutes for foods, particularly bakery products, which typically contain a significant amount of carbohydrate. Many attempts have been made to decrease the carbohydrate level in these products by substituting a protein source for flour in the product's formulation. While this approach has solved the problem of providing a high-protein, reduced carbohydrate product, generally, the resulting product does not have the handling characteristics, loaf volume, crumb grain, texture, or flavor of a traditional bakery product.

For example, if vital wheat gluten is used in large amounts in the production of bread dough, the dough will be too strong or bucky and difficult to handle during mixing, dividing, sheeting, and molding. Also, high levels of protein such as soy protein may adversely affect flavor and give unacceptable volume and crumb grain properties.

Therefore, there exists a real need in the art for a high-protein, reduced carbohydrate bakery product which closely resembles a traditional bakery product. The bakery product should exhibit dough handling, machineability, loaf volume, crumb grain, and flavor characteristics similar to those of a traditional bakery product.

US patent application No. 10/319,129 (publication No. 2003/0134023) and WO 03/049545 A discloses a dough composition for a high-protein, low carbohydrate bread comprising at least 5% vital wheat gluten, a hydrolyzed wheat protein, a moisture-managing agent, a fungal protease enzyme, a carbohydrate component consisting of digestible carbohydrate material and non-digestible carbohydrate material, and water. A combination of vital wheat gluten and hydrolysed wheat protein allows to formulate low carbohydrate bakery products that have improved structure, texture, and organoleptic properties that are comparable to conventional bread products. The preferred dough and bread compositions comprise a minor portion of standard bread flower, generally less than the portion of vital wheat gluten.

EP application No. 79 104 195.7 (publication No. 0 011 174) discloses a mixture for producing high protein bakery products, a method for baking this mixture and for bakery products produced from the mixture by the method. The mixture comprises 28 to 38 weight percent of vital wheat gluten, 4 to 8 weight percent of ultra filtrated whey protein concentrate, 1.5 to 5.5 weight percent of denatured soy protein concentrate, 2.5 to 6.5 weight percent of wheat bran, 0.7 to 1.5 weight percent of salt, 1 to 2 weight percent of dry yeast and 44 to 52 weight percent of water. A small portion of the water may be substituted by 1 to 2 weight percent of safflower oil, to which 5 weight percent of wheat germ oil may be added.

US patent application No. 10/868,190 (publication No. 2005/0276896 A1) discloses a dough composition comprising an aqueous leavened dispersion that comprises an effective but low amount of wheat flour for texture and flavor, an effective amount of gluten in excess of the flour content, and an effective amount of a protein source along with an effective amount of an edible fiber to provide high protein content, low carbohydrate content and bread-like texture.

### SUMMARY OF THE INVENTION

The present invention overcomes the above problems and provides a high-protein, reduced carbohydrate bakery product which exhibits dough handling properties, loaf volume, crumb grain, and flavor characteristics similar to those of a traditional bakery product. As used herein, the term "high protein, reduced carbohydrate bakery product" refers to compositions which contain higher protein and reduced carbohydrate amounts relative to more traditional-type products. The term "bakery product" includes, but is not limited to leavened or unleavened, traditionally flour-based products such as white pan and whole wheat breads (including sponge and dough bread), cakes, pretzels, muffins, donuts, brownies, cookies, pancakes, biscuits, rolls, crackers, pie crusts, pizza crusts, hamburger buns, pita bread, and tortillas.

The above problems are solved with a wheat flour containing bakery product including the features of claim 1.

As used herein, the term "baker's percentage" means the weight percent taken on a flour basis, with the weight of flour present in the product being 100 percent.

Furthermore, all protein weight percentages expressed herein are on a N x 6.25, dry basis, unless otherwise specified.

Wheat protein isolates are generally derived from wheat gluten by taking advantage of gluten's solubility at alkaline or acidic pH values. Wheat gluten is soluble in aqueous solutions with an acidic or alkaline pH and exhibits a classical "U-shaped" solubility curve with a minimum solubility or isoelectric point at pH 6.5-7.0. By dissolving the gluten, proteins can be separated from non-protein components by processes like filtration, centrifugation, or membrane processing followed by spray drying. Alternatively, wet gluten from wet processing of wheat flour can be repeatedly kneaded, water washed, and dewatered to get rid of contaminating starch and other non-protein components, and subsequently flash dried. These techniques yield a wheat protein isolate product with elevated protein content, at least about 85% by weight, more preferably at least about 90% by weight (on an N x 6.25, dry basis). Wheat protein isolates in general are less elastic but more extensible than wheat gluten. Examples of preferred wheat protein isolates include Arise^{™} 3000, Arise^{™} 5000, Arise^{™} 6000, Pasta Power, and Arise^{™} 8000 and their blends available from MGP Ingredients, Inc., Atchison, Kansas.

Wheat protein concentrates are proteinaceous compositions which preferably have protein contents of at least about 70% by weight, and preferably at least about 82% by weight (N x 6.25, dry basis). Wheat protein concentrates may be of different varieties manufactured by a number of different methods. Vital wheat gluten is one type of wheat protein concentrate that has a protein content of at least about 82% by weight (N x 6.25, dry basis). Vital wheat gluten is a viscoelastic protein manufactured by a flash drying method. Additional types of wheat protein concentrates are manufactured by dispersing wet gluten in an ammonia solution or dilute organic acids with or without reducing agents followed by spray drying. These wheat protein concentrates in general exhibit lesser viscoelastic properties than vital wheat gluten and tend to be more extensible. Examples of the latter type of wheat protein concentrates include FP100, FP 200, FP 300, FP 500, FP 600, and FP 800 available from MGP Ingredients.

Wheat gluten can be devitalized (or rendered non-vital) by the application of moisture, heat, pressure, shear, enzymes, and/or chemicals. Devitalized gluten is characterized by denaturation of proteins where structural changes occur and certain bonds are formed or broken resulting in a product that is non cohesive and lacks viscoelasticity. Typical processing equipment used to carry out this devitalization include extruders, jet-cookers, drum-driers, and boiling water tanks. For example, wheat gluten may undergo extrusion processing to produce a texturized product which does not exhibit the same viscoelastic properties of typical wheat gluten. In other words, the devitalized gluten does not form a rubbery and/or extensible dough when hydrated. Devitalized wheat gluten preferably comprises at least about 60% by weight protein, and more preferably at least about 70% by weight (N x 6.25, dry basis). Examples of devitalized wheat gluten for use with the present invention are Wheatex^{™} 16, Wheatex^{™} 120, Wheatex^{™} 240, Wheate^{™} 751, Wheatex^{™} 1501, Wheatex^{™} 2120, Wheatex^{™} 2240, Wheatex^{™} 2400, Wheatex^{™} 3000, Wheaten^{™} 6000, Wheatex^{™} 6500, and Wheatex^{™} RediShred 65 available from MGP Ingredients. These Wheatex ^{™} products may contain malt or caramel.

Wheat gluten is a binary mixture of gliadin and glutenin. These components can be separated by alcohol fractionation or by using a non-alcoholic process (as disclosed in U.S. Patent No. 5,610,277) employing the use of organic acids. Gliadin is soluble in 60-70% alcohol and comprises monomeric proteins with molecular weights ranging from 30,000 to 50,000 daltons. These proteins are classified as alpha-, beta-, gamma-, and omega-gliadins depending on their mobility during electrophoresis at low pH. Gliadin is primarily responsible for the extensible properties of wheat gluten. Glutenin is the alcohol insoluble fraction and contributes primarily to the elastic or rubbery properties of wheat gluten. Glutenin is a polymeric protein stabilized with inter-chain disulfide bonds and made up of high-molecular weight and low molecular weight subunits. Generally, glutenin exhibits a molecular weight exceeding one million daltons. Preferred fractionated wheat protein products comprise at least about 85% by weight protein, and more preferably at least about 90% by weight for gliadin and about 75% by weight protein, and more preferably at least about 80% by weight for glutenin, all proteins expressed on N x 6.25, dry basis.

Deamidated wheat protein products maybe manufactured according to a number of techniques. One such technique is to treat wheat gluten with low concentrations of hydrochloric acid at elevated temperatures to deamidate or convert glutamine and asparagine amino acid residues in the protein into glutamic acid and aspartic acid, respectively. Other techniques include treating wheat gluten with an alkaline solution or with enzymes such as transglutaminase. This modification causes a shift in the isoelectric point of the protein from about neutral pH to about pH 4. This signifies that the deamidated wheat protein product is least soluble at pH 4, but is soluble at neutral pH. Deamidated wheat protein products preferably comprise at least about 75% by weight protein, and more preferably at least about 83% by weight (N x6.25, dry basis). An example of a deamidated wheat protein product for use with the present invention is WPI 2100 available from MGP ingredients.

Hydrolyzed wheat protein products are manufactured by reacting an aqueous dispersion of wheat gluten with food-grade proteases having endo- and/or exo-activities to hydrolyze the proteins into a mixture of low-molecular weight peptides and polypeptides. The hydrolyzed mixture is then dried. Hydrolyzed wheat protein products generally exhibit a water solubility of at least about 50%. Hydrolyzed wheat protein products preferably have protein contents of at least about 70% by weight, more preferably at least about 82% by weight (6.25 x N, dry basis). Examples of hydrolyzed wheat protein products for use in the present invention include FP 400, FP 700, HWG 2009, PG 30, FP 1000, and FP 1000 Isolate, all available from MGP ingredients.

Preferably, high-protein bakery products according to the invention comprise from about 1-150 baker's percent of the first proteinaceous ingredient, more preferably from about 5-60 baker's percent. Preferred first proteinaceous ingredients comprise at least about 70% by weight protein and more preferably at lea 82% by weight protein (6.25 x N, dry basis). According to the invention, the first proteinaceous ingredient is selected from vital wheat gluten, soy protein concentrate, soy protein isolate, whey protein, sodium caseinate, nonfat dry milk, dried egg whites, wheat protein isolate, wheat protein concentrate, devitalized wheat gluten, fractionated wheat protein, and deamidated wheat gluten.

Bakery products according to the present invention may be chemically leavened or yeast leavened. Preferred chemical leavening agents include sodium bicarbonate, monocalcium phosphate, sodium aluminum phosphate, sodium aluminum sulfate, sodium acid pyrophosphate, dicalcium phosphate, potassium acid tartrate, and glucono-delta-lactone.

Preferred yeast-leavened bakery products and dough have a total protein content from about 5-35% by weight, and more preferably from about 20-28% by weight. Preferred chemically leavened bakery products and dough have a total protein content from about 4-18% by weight, more preferably from about 6-12% by weight.

Preferably, bakery products made in accordance with the present invention comprise an amount of resistant starch. The resistant starch may be used in place of at least a portion of the flour which comprises traditional bakery products, thereby effectively reducing the "net" carbohydrate total of the bakery product. As explained in further detail below, resistant starch is generally not digestible thereby exhibiting characteristics which are similar to those of dietary fiber.

In 1987 Englyst and Cummings at the MRC Dunn Clinical Nutrition Center in Cambridge, UK, proposed a classification of starch based on its likely digestive properties in vivo. They also devised in vitro assay methods to mimic the various digestive properties of starch. Three classes of dietary starch were proposed:

Rapidly Digestible Starch (RDS). RDS is likely to be rapidly digested In the human small intestine, examples include freshly cooked rice and potato, and some Instant breakfast cereals.

Slowly Digestible Starch (SDS). SDS is likely to be slowly yet completely digested In the small intestine; examples include raw cereal starch and cooked pasta.

Resistant Starch (RS). RS is likely to resist digestion in the small Intestine. RS is thus defined as the sum of starch and starch degradation products not likely to be absorbed in the small intestine of healthy individuals. RS can be subdivided into four categories depending on the cause of resistance (Englyst et al., Eur. J. Clin. Nutr. 48(suppl 2):S33, 9992; Eerlingen et al., Cereal Chem. 70:339, 1993).

RS₁. Physically inaccessible starch due to entrapment of granules within a protein matrix or within a plant cell wall, such as in partially milled grain or legumes after cooling.

RS₂. Raw starch granules, such as those from potato or green banana, that resist digestion by alpha-amylase, possibly because those granules lack micropores through their surface.

RS₃. Retrograded amylose formed by heat/moisture treatment of starch or starch foods, such as occurs in cooked/cooled potato and corn flake.

RS₄. Chemically modified starches, such as acetylated, hydroxypropylated, or cross-linked starches that resist digestion by alpha-amylase. Those modified starches would be detected by the in vitro assay of RS. However, some RS₄ may not be fermented in the colon.

RS₁, RS₂, RS₃ are physically modified forms of starch and become accessible to alpha-amylase digestion upon solubilization in sodium hydroxide or dimethyl sulfoxide. RS₄ that is chemically substituted remains resistant to alpha-amylase digestion even if dissolved. RS₄ produced by cross-linking would resist dissolution.

Highly cross-linked wheat starches belonging to RS₄ category may be manufactured by processes disclosed in U.S. Patent No. 5,855,946 and U.S. Patent No. 6,299,907. Typical total dietary fiber content (AOAC Method 991.43) of these RS₄ products can range from 10% to greater than 70%. Examples of preferred RS₄ products for use with the present invention are the FiberStar series, for example FiberStar 70, and FiberStar 80 ST available from MGP Ingredients. The FiberStar series consists of RS₄ produced from plant starches such as wheat, potato, corn, tapioca, rice, and other botanical sources, which includes waxy and high-amylose variants.

Preferred products according to the present invention comprise from about 5-120 baker's percent of a resistant starch, and more preferably from about 20-90 baker's percent.

Table 1 summarizes broad and preferred ranges of the various second proteinaceous ingredients for use in products according to the present invention. The various weight percentages listed are on a flour weight basis (or baker's percent).

**TABLE 1**

| **Second Proteinaceous Ingredient** | **Broad Range** | **Preferred Range** |
|---|---|---|
| Wheat protein isolate product | 0.5-100% | 5-50% |
| Fractionated wheat protein product | 0.5-20% | 0.5-5% |
| Deamidated wheat gluten product | 0.5-20% | 0.5-5% |

Preferred products made in accordance with the invention exhibit several nutritional and functional benefits. The products are a good source of nutrition due to their elevated protein content and because of a reduced total caloric contribution from carbohydrates. The various protein sources provide a good complement of amino acids. In addition to being an excellent source of fiber (attributable to the presence of resistant starch), the products exhibit a low glycemic index. As stated previously, the inventive formulation improves dough handling and machinability, decreases dough buckiness, and improves product flavor.

### DETAILED DESCRIPTION OF THE PREFERRED EMBODIMENT

The following examples set forth preferred products in accordance with the present invention. It is to be understood, however, that these examples are provided by way of illustration and nothing therein should be taken as a limitation upon the overall scope of the invention. It is to be noted in this connection that examples 4, 11, 14, 17, 19, 20, 25, 33-46, 53-57, 59-63 and 82-85 constitute comparative examples.

For Examples 1-11, the following mixing and baking procedures were used. All dry ingredients were blended together until thoroughly incorporated. All liquid ingredients were added and the dough mixed for one minute on low speed using a Hobart A200 mixer (Hobart Corp.) with a spiral dough hook, and then mixed for 2-2.5 minutes on high speed. The mixing was relatively minimal to prevent excessive development and excessively tough and rubbery bread. The dough scaling weight followed a pan factor of 2.00-2.05. The dough scaling weight (in ounces) was determined by dividing the area (in square inches, 1 square inch = 6.452 cm²) of the top of the bread pan by the pan factor. The dough was proofed at 110°F (x °F = x × 9/5 + 32 °C) with a relative humidity of 85%. The dough was baked at 390°F for 37-42 minutes.

### EXAMPLE 1

### HIGH-PROTEIN, REDUCED-CARBOHYDRATE BREAD

| **Ingredients** | **Weight % (Flour Weight Basis)** |
|---|---|
| Vital Wheat Gluten | 111.1 |
| Bread Flour | 100.0 |
| Wheat Protein Isolate¹ | 27.8 |
| Hydrolyzed Wheat Protein² | 16.7 |
| Yeast | 11.1 |
| Whey Protein | 16.7 |
| Flavor (Butter, Masking) | 2.2 |
| Salt | 5.0 |
| Sucralose (Artificial Sweetener) | 0.1 |
| Water | 264.0 |

| | |
|---|---|
| ¹ ARISE™ 5000 available from MGP Ingredients. ² HWG 2009 available from MGP Ingredients. | |

The proportions and constituents of this mixture may be varied. For example, the baker's percent of the wheat protein isolate product preferably ranges from about 22 to about 33, and more preferably ranges from about 25 to about 31. For another example, the baker's percent of the hydrolyzed wheat protein product preferably ranges from about 13 to about 20.

### EXAMPLE 2

### HIGH-PROTEIN, REDUCED-CARBOHYDRATE BREAD

| **Ingredients** | **Weight % (Flour Weight Basis)** |
|---|---|
| Vital Wheat Gluten | 111.1 |
| Bread Flour | 100.0 |
| Wheat Protein Isolate¹ | 44.5 |
| Yeast | 11.1 |
| Whey Protein | 16.7 |
| Flavor (Butter, Masking) | 2.2 |
| Salt | 5.0 |
| Sucralose (Artificial Sweetener) | 0.1 |
| Water | 264.0 |

| | |
|---|---|
| ¹ ARISE™ 5000 available from MGP Ingredients. | |

The proportions and constituents of this mixture may be varied. For example, the baker's percent of the wheat protein isolate product preferably ranges from about 36 to about 53, and more preferably ranges from about 40 to about 49.

### EXAMPLE 3

### HIGH-PROTEIN, REDUCED-CARBOHYDRATE BREAD

| **Ingredients** | **Weight % (Flour Weight Basis)** |
|---|---|
| Vital Wheat Gluten | 111.1 |
| Bread Flour | 100.0 |
| Wheat Protein Isolate¹ | 44.5 |
| Yeast | 11.1 |
| Whey Protein | 16.7 |
| Flavor (Butter, Masking) | 2.2 |
| Salt | 5.0 |
| Sucralose (Artificial Sweetener) | 0.1 |
| Fungal Protease | 0.03 |
| Water | 264.0 |

| | |
|---|---|
| ¹ ARISE™ 5000 available from MGP Ingredients. | |

The proportions and constituents of this mixture may be varied. For example, the baker's percent of the wheat protein isolate product preferably ranges from about 36 to about 53, and more preferably ranges from about 40 to about 49.

### EXAMPLE 4

### HIGH-PROTEIN, REDUCED-CARBOHYDRATE BREAD

| **Ingredients** | **Weight % (Flour Weight Basis)** |
|---|---|
| Vital Wheat Gluten | 111.1 |
| Bread Flour | 100.0 |
| Soy Protein Isolate | 44.5 |
| Yeast | 11.1 |
| Whey Protein | 16.7 |
| Flavor (Butter, Masking) | 2.2 |
| Salt | 5.0 |
| Sucralose (Artificial Sweetener) | 0.1 |
| Fungal Protease | 0.03 |
| Water | 264.0 |

| | |
|---|---|
| ¹ ARISE™ 5000 available from MGP Ingredients. | |

The proportions and constituents of this mixture may be varied. For example, the baker's percent of the soy protein isolate product preferably ranges from about 36 to about 53, and more preferably ranges from about 40 to about 49.

### EXAMPLE 5

### HIGH-PROTEIN, REDUCED-CARBOHYDRATE BREAD

| **Ingredients** | **Weight % (Flour Weight Basis)** |
|---|---|
| Vital Wheat Gluten | 111.1 |
| Bread Flour | 100.0 |
| Wheat Protein Concentrate¹ | 44.5 |
| Yeast | 10.0 |
| Whey Protein | 16.7 |
| Flavor (Butter, Masking) | 1.1 |
| Salt | 5.0 |
| Sucralose (Artificial Sweetener) | 0.1 |
| Water | 264.0 |

| | |
|---|---|
| ¹ FP 500 available from MGP Ingredients. | |

The proportions and constituents of this mixture may be varied. For example, the baker's percent of the wheat protein concentrate product preferably ranges from about 36 to about 53, and more preferably ranges from about 40 to about 49.

### EXAMPLE 6

### HIGH-PROTEIN, REDUCED-CARBOHYDRATE BREAD

| **Ingredients** | **Weight % (Flour Weight Basis)** |
|---|---|
| Vital Wheat Gluten | 111.1 |
| Bread Flour | 100.0 |
| Wheat Protein Concentrate¹ | 44.5 |
| Yeast | 10.0 |
| Whey Protein | 16.7 |
| Flavor (Butter, Masking) | 1.1 |
| Salt | 5.0 |
| Sucralose (Artificial Sweetener) | 0.1 |
| Devitalized Wheat Gluten² | 20.8 |
| Water | 285.0 |

| | |
|---|---|
| ¹ FP 500 available from MGP Ingredients. ² Wheatex™ 16 available from MGP Ingredients. | |

The proportions and constituents of this mixture may be varied. For example, the baker's percent of the wheat protein concentrate product preferably ranges from about 36 to about 53, and more preferably ranges from about 40 to about 49. For another example, the baker's percent of the devitalized wheat gluten product preferably ranges from about 17 to about 25.

### EXAMPLE 7

### HIGH-PROTEIN, REDUCED-CARBOHYDRATE WHOLE WHEAT BREAD

| **Ingredients** | **Weight % (Flour Weight Basis)** |
|---|---|
| Whole Wheat Flour | 100.0 |
| Vital Wheat Gluten | 62.5 |
| Wheat Protein Isolate¹ | 50.0 |
| Compressed Yeast | 8.8 |
| Shortening | 8.8 |
| Salt | 2.5 |
| Sucralose (Artificial Sweetener) | 0.1 |
| Water | 190.0 |

| | |
|---|---|
| ¹ Arise™ 6000 available from MGP Ingredients. | |

The proportions and constituents of this mixture may be varied. For example, the baker's percent of the wheat protein isolate product preferably ranges from about 40 to about 60, and more preferably ranges from about 45 to about 55.

### EXAMPLE 8

### HIGH-PROTEIN, REDUCED-CARBOHYDRATE WHOLE WHEAT BREAD

| **Ingredients** | **Weight % (Flour Weight Basis)** |
|---|---|
| Whole White Wheat Flour | 100.0 |
| Vital Wheat Gluten | 62.5 |
| Wheat Protein Isolate¹ | 50.0 |
| Compressed Yeast | 8.8 |
| Shortening | 8.8 |
| Salt | 2.5 |
| Sucralose (Artificial Sweetener) | 0.1 |
| Water | 190.0 |

| | |
|---|---|
| ¹ Arise™ 6000 available from MGP Ingredients. | |

The proportions and constituents of this mixture may be varied. For example, the baker's percent of the wheat protein isolate product preferably ranges from about 40 to about 60, and more preferably ranges from about 45 to about 55.

### EXAMPLE 9

### HIGH-PROTEIN, REDUCED-CARBOHYDRATE WHITE PAN BREAD

| **Ingredients** | **Weight % (Flour Weight Basis)** |
|---|---|
| Whole White Wheat Flour | 100.0 |
| Vital Wheat Gluten | 62.5 |
| Wheat Protein Isolate¹ | 50.0 |
| Compressed Yeast | 8.8 |
| Shortening | 8.8 |
| Salt | 2.5 |
| Sucralose (Artificial Sweetener) | 0.1 |
| Water | 170.0 |

| | |
|---|---|
| ¹ Arise™ 6000 available from MGP Ingredients. | |

The proportions and constituents of this mixture may be varied. For example, the baker's percent of the wheat protein isolate product preferably ranges from about 40 to about 60, and more preferably ranges from about 45 to about 55.

### EXAMPLE 10

### HIGH-PROTEIN, REDUCED-CARBOHYDRATE WHITE PAN BREAD

| **Ingredients** | **Weight % (Flour Weight Basis)** |
|---|---|
| Bread Flour | 100.0 |
| Vital Wheat Gluten | 62.5 |
| Wheat Protein Isolate¹ | 50.0 |
| Resistant Starch² | 12.5 |
| Compressed Yeast | 8.8 |
| Shortening | 8.8 |
| Salt | 2.5 |
| Sucralose (Artificial Sweetener) | 0.1 |
| Water | 170.0 |

| | |
|---|---|
| ¹ Arise™ 6000 available from MGP Ingredients. ² Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

The proportions and constituents of this mixture may be varied. For example, the baker's percent of the resistant starch product preferably ranges from about 10 to about 15, and more preferably ranges from about 11 to about 14. For another example, the baker's percent of the wheat protein isolate product preferably ranges from about 40 to about 60.

### EXAMPLE 11

### HIGH-PROTEIN, REDUCED-CARBOHYDRATE WHITE PAN BREAD

| **Ingredients** | **Weight % (Flour Weight Basis)** |
|---|---|
| Bread Flour | 100.0 |
| Vital Wheat Gluten | 62.5 |
| Wheat Protein Isolate¹ | 50.0 |
| Resistant Starch² | 12.5 |
| Devitalized Wheat Gluten³ | 5.0 |
| Compressed Yeast | 8.8 |
| Shortening | 8.8 |
| Salt | 2.5 |
| Sucralose (Artificial Sweetener) | 0.1 |
| Water | 170.0 |

| | |
|---|---|
| ¹ Arise™ 6000 available from MGP Ingredients. ² FiberStar 70 available from MGP Ingredients. FiberStar 70 is produced from wheat starch according to USP 5,855,946. Other resistant starches made from wheat starch according to | |

USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above.

The proportions and constituents of this mixture may be varied. For example, the baker's percent of the resistant starch product preferably ranges from about 10 to about 15, and more preferably ranges from about 11 to about 14. For other examples, the baker's percent of the wheat protein isolate product preferably ranges from about 40 to about 60 and the baker's percent of the devitalized wheat gluten product preferably ranges from about 4 to about 6.

### EXAMPLE 12

### HIGH-PROTEIN, REDUCED-CARBOHYDRATE WHOLE WHEAT BREAD

| **Ingredients** | **Weight % (Flour Weight Basis)** |
|---|---|
| Whole Wheat Flour | 100.0 |
| Vital Wheat Gluten | 25.7 |
| Wheat Protein Isolate¹ | 17.1 |
| Hydrolyzed Wheat Protein² | 1.4 |
| Resistant Starch³ | 21.4 |
| Compressed Yeast | 9.3 |
| Salt | 2.9 |
| Water | 107 |
| Vegetable Oil | 10.7 |
| Sucralose (Artificial Sweetener) | 0.03 |
| Calcium Propionate | 0.65 |
| Diacetyl Tartaric Acid Easters of Mono- and Diglycerides | 0.60 |
| Sodium Stearoyl Lactylate | 0.60 |
| Azodicarbonamide | 0.006 |
| Asorbic Acid | 0.02 |
| Natural Butter Flavor | 0.36 |

| | |
|---|---|
| ¹ Arise™ 6000 available from MGP Ingredients. ² HWG 2009 available from MGP Ingredients. ³ FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

In this Example 12, all dry ingredients were blended together until completely uniform. Liquid ingredients were added next and mixed for 1 minute on low and 5.5 minutes on high speed using Hobart mixer (Hobart Corp.) equipped with a spiral dough hook. Dough scaling weight followed a pan factor of 2.05. The dough weight was determined by dividing the area (in square inches) of the top of the bread pan by 2.05. The dough was proofed at 110°F and 85% relative humidity, and then baked at 400°F for 25 minutes.

The proportions and constituents of this mixture may be varied. For example, the baker's percent of the resistant starch product preferably ranges from about 17 to about 26, and more preferably ranges from about 19 to about 24. For other examples, the baker's percent of the wheat protein isolate product preferably ranges from about 14 to about 21, and the baker's percent of the hydrolyzed wheat protein product preferably ranges from about 1 to about 2.

### EXAMPLE 13

### HIGH-PROTEIN, REDUCED-CARBOHYDRATE BAGEL

| **Ingredients** | **Weight % (Flour Weight Basis)** |
|---|---|
| Vital Wheat Gluten | 111.1 |
| Bread Flour | 100.0 |
| Wheat Protein Concentrate¹ | 50.0 |
| Yeast | 10.0 |
| Whey Protein | 16.7 |
| Flavor (Butter, Masking) | 1.10 |
| Salt | 6.0 |
| Sucralose (Artificial Sweetener) | 0.1 |
| L-Cysteine | 0.005 |
| Water | 267.0 |

| | |
|---|---|
| ¹ FP 500 available from MGP Ingredients. | |

In this Example 13, all dry ingredients were blended together until completely homogeneous. Water was added to blended ingredients and mixed to optimum development using a Hobart mixer (Hobart Corp.). About 4.3 ounces of bagel dough was weighed, proofed briefly, and baked in an oven (with steam) at 390°F for 17-22 minutes.

The proportions and constituents of this mixture may be varied. For example, the baker's percent of the wheat protein concentrate product preferably ranges from about 40 to about 60, and more preferably ranges from about 45 to about 55.

### EXAMPLE 14

### REDUCED-CARBOHYDRATE FRENCH CRULLER DONUT

| **Ingredients** | **Weight % (Based on Total Weight)** |
|---|---|
| Vital Wheat Gluten | 1.13 |
| Deamidated Wheat Gluten¹ | 1.00 |
| Resistant Starch² | 7.00 |
| Water | 43.00 |
| Whole eggs | 25.40 |
| Pregel 10FC | 14.60 |
| Carboxymethyl cellulose | 0.08 |
| Sodium Caseinate | 0.62 |
| All purpose shortening | 5.80 |
| 65 A type emulsifier | 0.85 |
| Baking soda | 0.06 |
| Sodium acid pyrophosphate 40 | 0.02 |
| Monocalcium phosphate (particle size 12 XX) | 0.08 |
| Flavor | 0.03 |
| Color (beta-carotene) | 0.03 |
| Salt | 0.30 |

| | |
|---|---|
| ¹ WPI 2100 available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

This French Cruller donut is an example of a chemically leavened, fried product according to the invention. All ingredients (except the water and eggs) were mixed until uniform. Hot water (125-130°F) was added and the batter mixed on low speed for 30 seconds. The mixer speed was increased to medium and the batter mixed an additional two minutes, at which time the eggs were added and the batter mixed on low speed for one minute. The batter was mixed an additional three minutes on medium speed. The temperature of the batter was between 85-90°F. The donuts were fried for 2 3/4 minutes on the first side, then turned and fried for three minutes on the second side, and finally turned again and fried for 15 seconds.

The proportions and constituents of this mixture may be varied. For example, the percent of the resistant starch product preferably ranges from about 5 to about 9, and more preferably ranges from about 6 to about 8. For another example, the percent of the deamidated wheat gluten product preferably ranges from about .8 to about 1.2.

### EXAMPLE 15

### REDUCED-CARBOHYDRATE CHOCOLATE CAKE DONUT

| **Ingredients** | **Weight % (Flour Weight Basis)** |
|---|---|
| Flour | 100.0 |
| Sugar (ultra fine pure cane) | 99.3 |
| Crystalline fructose | 17.1 |
| Dextrose 333 | 1.3 |
| Defatted soy flour | 8.6 |
| Corn flour | 6.4 |
| Wheat Protein Isolate¹ | 11.8 |
| Vital Wheat Gluten | 10.0 |
| Resistant Starch² | 90.0 |
| Dried egg yolk | 8.6 |
| Salt | 3.9 |
| Pregel 46 | 2.1 |
| Pregel 10 | 2.1 |
| Powdered lecithin | 1.1 |
| Sodium bicarbonate | 3.2 |
| Sodium acid pyrophosphate #28 | 1.7 |
| Sodium acid pyrophosphate #37 | 3.9 |
| Carboxymethyl cellulose | 0.2 |
| Sodium propionate | 2.1 |
| Dutched cocoa | 33.6 |
| Vegetable oil | 18.8 |
| Emulsifier | 1.2 |
| Pure vanilla extract | 1.5 |

| | |
|---|---|
| ¹ Arise™ 5000 available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

In the chocolate cake donut formula (a chemically-leavened, fried product according to the invention), the emulsifier and sugar were creamed together. All dry ingredients were then incorporated to the creamed sugar mixture for 10 minutes at speed 2 in a Kitchen Aid mixer (Hobart Corp.) equipped with a paddle. Water at 81°F was added and mixed for one minute at speed 1 and at speed 2 for one minute and 35 seconds. The quantity of water ranged from 46-48% of the dry mix weight. The batter temperature was between 76-78°F. The batter was rested for 6 minutes at room temperature, and then fried for one minute each side.

The proportions and constituents of this mixture may be varied. For example, the baker's percent of the resistant starch product preferably ranges from about 72 to about 108, and more preferably ranges from about 81 to about 99. For another example, the baker's percent of the wheat protein isolate product preferably ranges from about 9 to about 14.

### EXAMPLE 16

### REDUCED-CARBOHYDRATE BLUEBERRY MUFFIN MIX

| **Ingredients** | **Weight % (Flour Weight Basis)** |
|---|---|
| Flour | 100.0 |
| Vital Wheat Gluten | 5.0 |
| Fractionated Wheat Protein¹ | 5.0 |
| Resistant Starch² | 90.0 |
| Sucrose | 160.0 |
| Nonfat dry milk | 20.0 |
| All purpose shortening | 57.4 |
| Emulsified shortening | 17.0 |
| Salt | 3.8 |
| Baking powder | 10.0 |
| Pregel 40 | 8.0 |
| Flavor | 2.0 |
| Xantham gum | 0.4 |
| Guar gum | 0.4 |
| Sodium stearoyl lactylate | 0.5 |
| Blueberries | 60.0 |
| Whole egg | 40.0 |
| Water | 50.0 |

| | |
|---|---|
| ¹ Gliadin available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

The blueberry muffin mix is an example of a chemically-leavened, baked product according to the present invention. The sugar, salt, and shortening were blended together until uniform. The remaining ingredients (except for the eggs and water) were added and mixed until uniform. The eggs were added along with half of the water and the batter was mixed in a mixer on medium speed for 2 minutes. Then, the remaining water was added and the batter mixed on low speed for an additional 2 minutes. The blueberries were gently folded into the batter which was then poured into muffin cups. Baking time and temperature will largely depend upon muffin size, however, generally, a 75 gram muffin will be baked at 400°F for 20 minutes.

The proportions and constituents of this mixture may be varied. For example, the baker's percent of the resistant starch product preferably ranges from about 72 to about 108, and more preferably ranges from about 81 to about 99. For another example, the baker's percent of the fractionated wheat protein product preferably ranges from about 4 to about 6.

### EXAMPLE 17

### REDUCED-CARBOHYDRATE POUND CAKE

| **Ingredients** | **Weight % (Flour Weight Basis)** |
|---|---|
| Granulated sugar | 201.0 |
| Salt | 4.2 |
| Nonfat dry milk | 10.6 |
| Cake flour | 100.0 |
| Vital Wheat Gluten | 7.4 |
| Devitalized Wheat Gluten¹ | 18.1 |
| Resistant Starch² | 74.5 |
| Shortening (Emulsified) | 119.1 |
| Pregel 40 | 7.4 |
| Water | 76.5 |
| Whole eggs | 68.1 |
| Yolks | 51.0 |
| Flavor | 4.2 |
| Baking powder | 2.2 |

| | |
|---|---|
| ¹ Wheatex™ 16 available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

This pound cake is an example of a chemically-leavened, baked product according to the present invention. All ingredients (except for the eggs and water) were blended together until uniform. The water was added and the batter mixed until smooth. The eggs were then added in three stages and mixed until the batter was uniform and fluffy. The cake was baked at 375°F for 45-50 minutes.

The proportions and constituents of this mixture may be varied. For example, the baker's percent of the resistant starch product preferably ranges from about 60 to about 89, and more preferably ranges from about 67 to about 82. For another example, the baker's percent of the devitalized wheat gluten product preferably ranges from about 15 to about 22.

### EXAMPLE 18

### REDUCED-CARBOHYDRATE CHOCOLATE CAKE

| **Ingredients** | **Weight % (Flour Weight Basis)** |
|---|---|
| Sugar | 229.6 |
| Salt | 4.5 |
| Nonfat dry milk | 26.7 |
| Cocoa (10/12 natural) | 40.0 |
| Cake flour | 100.0 |
| Vital Wheat Gluten | 4.8 |
| Wheat Protein Isolate¹ | 9.5 |
| Resistant Starch² | 94.6 |
| Pregel 40 | 4.1 |
| Shortening with emulsifier | 89.1 |
| Baking powder | 9.0 |
| Water | 228.6 |
| Flavor | 4.5 |
| Whole eggs | 107.6 |

| | |
|---|---|
| ¹ Arise™ 3000 available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

This chocolate cake is an example of a chemically-leavened, baked product according to the present invention. All ingredients (except for the water) were blended together until uniform. Next, 60% of the water was added and the batter mixed on medium speed for 3 minutes. The bowl was scraped, the remaining water was added, and the batter mixed on low speed for 2-3 minutes. The batter was poured into pans and baked at 400°F until the center was done.

The proportions and constituents of this mixture may be varied. For example, the baker's percent of the resistant starch product preferably ranges from about 76 to about 114, and more preferably ranges from about 85 to about 104. For another example, the baker's percent of the wheat protein isolate product preferably ranges from about 8 to about 11.

### EXAMPLE 19

### REDUCED-CARBOHYDRATE YELLOW OR WHITE CAKE

| **Ingredients** | **Weight % (Flour Weight Basis)** |
|---|---|
| Sugar | 203.8 |
| Salt | 4.2 |
| Nonfat dry milk | 17.7 |
| Cake flour | 100.0 |
| Vital Wheat Gluten | 11.5 |
| Hydrolyzed Wheat Protein² | 3.8 |
| Resistant Starch³ | 84.6 |
| Pregel 10 | 5.2 |
| Shortening with emulsifier | 85.5 |
| Baking powder | 9.6 |
| Water | 136.7 |
| Flavor | 3.9 |
| Eggs' | 102.5 |

| | |
|---|---|
| ¹ For yellow cake use ½ whole eggs and ½ yolks for egg mixture. For white cake use ½ whole eggs and ½ whites for egg mixture. ² HWG 2009 available from MGP Ingredients. ³ FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

This yellow or white cake is an example of a chemically-leavened, baked product according to the present invention. All ingredients (except for the water and eggs) were blended together until uniform. Sixty percent of the water was added and the batter mixed for 3 minutes on medium speed. The eggs were added and the batter mixed on medium speed for 3 minutes. The remaining water was added and the batter mixed for an additional 2-3 minutes on low speed. The cake was baked at 350°F for 20 minutes, or until the center was done.

The proportions and constituents of this mixture may be varied. For example, the baker's percent of the resistant starch product preferably ranges from about 68 to about 102, and more preferably ranges from about 76 to about 93. For another example, the baker's percent of the hydrolyzed wheat protein product preferably ranges from about 3 to about 5.

### EXAMPLE 20

### REDUCED-CARBOHYDRATE CHOCOLATE CHIP COOKIES

| **Ingredients** | **Weight % (Flour Weight Basis)** |
|---|---|
| Pastry flour | 100.0 |
| Vital Wheat Gluten | 6.2 |
| Devitalized Wheat Gluten¹ | 3.1 |
| Resistant Starch² | 90.8 |
| Shortening | 91.9 |
| Butter or margarine | 40.1 |
| Brown sugar | 100.0 |
| Sucrose | 100.0 |
| Soda | 3.1 |
| Salt | 5.6 |
| Whole eggs | 66.0 |
| Pregel 10 | 10.0 |

| | |
|---|---|
| ¹ Wheatex™ 16 available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

This chocolate chip cookie is an example of a chemically-leavened, baked product according to the present invention. All ingredients (except for the pastry flour) were blended on low speed for approximately 3 minutes. The pastry flour was added and the dough mixed for an additional minute on low speed. Chocolate chips were then added at a desired amount and the dough mixed until the chips were uniformly distributed. The dough was made into balls and baked at 370-380°F for 10-12 minutes.

The proportions and constituents of this mixture may be varied. For example, the baker's percent of the resistant starch product preferably ranges from about 73 to about 109, and more preferably ranges from about 82 to about 100. For another example, the baker's percent of the devitalized wheat gluten product preferably ranges from about 3 to about 4.

### EXAMPLE 21

### REDUCED-CARBOHYDRATE FRIED PIE CRUST

| **Ingredients** | **Weight % (Flour Weight Basis)** |
|---|---|
| Flour, soft | 100.0 |
| Vital Wheat Gluten | 6.3 |
| Fractionated Wheat Protein¹ | 3.6 |
| Resistant Starch² | 90.1 |
| Soy flour | 6.0 |
| High-heat nonfat dry milk | 4.0 |
| Sucrose | 8.0 |
| Dextrose | 4.0 |
| Salt | 5.0 |
| Soda | 0.5 |
| Pregel 10 | 3.0 |
| Shortening | 60.0 |
| Ice water | 70.0 |

| | |
|---|---|
| ¹ Glutenin available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

The ingredients for fried pie crust were blended together and mixed until uniform. The dough was then formed, filled and deep fried in 350°F oil until golden brown (approximately 3-4 minutes).

The proportions and constituents of this mixture may be varied. For example, the baker's percent of the resistant starch product preferably ranges from about 72 to about 108, and more preferably ranges from about 81 to about 99. For another example, the baker's percent of the fractionated wheat protein product preferably ranges from about 3 to about 4.

### EXAMPLE 22

### REDUCED-CARBOHYDRATE PIE DOUGH

| **Ingredients** | **Weight % (Flour Weight Basis)** |
|---|---|
| Pastry flour | 100.0 |
| Vital Wheat Gluten | 7.2 |
| Wheat Protein Concentrate¹ | 2.0 |
| Resistant Starch² | 90.8 |
| Pregel 10 | 4.0 |
| Salt | 6.7 |
| Dextrose | 6.0 |
| All purpose shortening | 120.0 |
| Ice water | 58.0 |

| | |
|---|---|
| ¹ FP 600 available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

The dry ingredients for pie dough were blended together until uniform. The shortening was blended in on low speed for 1-1.5 minutes. Then, the cold water was added and the dough mixed for an additional 30 seconds on low speed. Finally, the dough was formed into pie crust.

The proportions and constituents of this mixture may be varied. For example, the baker's percent of the resistant starch product preferably ranges from about 73 to about 109, and more preferably ranges from about 82 to about 100. For another example, the baker's percent of the wheat protein concentrate product preferably ranges from about 1.6 to about 2.4.

### EXAMPLE 23

### REDUCED-CARBOHYDRATE LOW-FAT CRUNCHY BAR

| **Ingredients** | **Weight % (Based on Total Weight)** |
|---|---|
| Corn Syrup | 18.5 |
| Vital Wheat Gluten | 1.0 |
| Devitalized Wheat Gluten¹ | 15.0 |
| Wheat Protein Isolate² | 4.0 |
| Chocolate coating | 15.0 |
| Date paste | 10.0 |
| Granola | 8.7 |
| Crisp rice | 7.0 |
| Honey | 10.0 |
| Chocolate chips | 3.0 |
| Coconut | 1.5 |
| Almonds | 1.5 |
| Brown sugar | 4.7 |
| Nutmeg | 0.1 |

| | |
|---|---|
| ¹ Wheatex™ 120 available from MGP Ingredients. ² Arise™ 6000 available from MGP Ingredients. | |

All ingredients for low-fat crunchy bar (except for the chocolate coating) were mixed together until uniform. The mixture was formed into bars, coated with chocolate and packaged.

The proportions and constituents of this mixture may be varied. For example, the percent of the wheat protein isolate product preferably ranges from about 3 to about 5, and more preferably ranges from about 3.6 to about 4.4. For another example, the percent of the devitalized wheat gluten product preferably ranges from about 12 to about 18.

### EXAMPLE 24

### REDUCED-CARBOHYDRATE PRETZEL DOUGH

| **Ingredients** | **Weight % (Flour Weight Basis)** |
|---|---|
| All purpose flour | 100.0 |
| Wheat Protein Isolate¹ | 5.5 |
| Vital wheat gluten | 11.0 |
| Resistant starch² | 5.5 |
| Shortening | 2.5 |
| Instant yeast | 0.22 |
| Salt | 0.9 |
| Malt | 0.5 |
| Water | 60.0 |

| | |
|---|---|
| ¹ Arise™ 6000 available from MGP Ingredients. ² FiberStar 70 available from MGP Ingredients FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

All dry ingredients were mixed together. The water was added and the dough mixed for one minute in a Hobart mixer (Hobart Corp.) at low speed and 8-10 minutes at medium speed. The dough was proofed for 30 minutes (110°F and 85% relative humidity) and then the dough formed into the desired shape. The dough was allowed to rest for 5 minutes and was then immersed in 0.25% sodium hydroxide solution at 185-190°F for 25 seconds. The dough was baked at 475-500°F for 3 minutes and then at 400-425°F for 3.5 minutes. The pretzels were placed in a drying oven for 30 minutes at 220-300°F.

The proportions and constituents of this mixture may be varied. For example, the baker's percent of the resistant starch product preferably ranges from about 4 to about 7, and more preferably ranges from about 5 to about 6. For another example, the baker's percent of the wheat protein isolate product preferably ranges from about 4 to about 7.

### EXAMPLE 25

### REDUCED-CARBOHYDRATE EXTRUDED BREAKFAST CEREAL MIX

| **Ingredients** | **Weight % (Based on Total Weight)** |
|---|---|
| Corn flour | 42.0 |
| Wheat flour | 15.0 |
| Vital Wheat Gluten | 1.5 |
| Hydrolyzed Wheat Protein¹ | 0.5 |
| Resistant Starch² | 13.0 |
| Oat flour | 20 |
| Sugar | 6 |
| Salt | 2 |

| | |
|---|---|
| ¹ HWG 2009 available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

All dry ingredients were blended together until uniform and processed conventionally in a single- or twin-screw extruder to make a fruit loop-type product. Moisture was added in the conditioner as well as from the steam injected into the barrel.

The proportions and constituents of this mixture may be varied. For example, the percent of the resistant starch product preferably ranges from about 10 to about 16, and more preferably ranges from about 12 to about 14. For another example, the percent of the hydrolyzed wheat protein product preferably ranges from about .4 to about .6.

### EXAMPLE 26

### REDUCED-CARBOHYDRATE HIGH PROTEIN WHOLE WHEAT BREAD (SPONGE AND DOUGH)

This example describes the preparation of a sponge and dough bread according to the present invention. The respective formulations are as follows:

| **Ingredients** | **Weight % (Flour Weight Basis)** |
|---|---|
| SPONGE | |
| Whole wheat flour | 70.0 |
| Vital wheat gluten | 15.0 |
| Compressed yeast | 4.0 |
| DOUGH | |
| Whole wheat flour | 30.0 |
| Vital wheat gluten | 50.0 |
| Wheat Protein Isolate¹ | 49.0 |
| Hydrolyzed Wheat Protein² | 1.0 |
| Compressed yeast | 5.1 |
| Salt | 3.0 |
| Water | 190.2 |
| Shortening | 9.0 |
| Sucralose | 0.04 |
| Calcium propionate | 0.25 |
| Diacetyl tartaric acid esters of mono- and diglycerides | 0.50 |

| | |
|---|---|
| ¹ Arise^{™} 6000 available from MGP Ingredients. ² HWG 2009 available from MGP Ingredients. | |

The sponge ingredients were first mixed for one minute on low speed, and then mixed for an additional minute on high speed. The sponge was then allowed 3 hours of fermentation time. In preparation of the dough, all of the dough ingredients were added to the sponge and mixed for one minute at low speed followed by one minute of mixing at high speed. The dough was allowed 5 minutes of floor time, and then the dough was scaled to the desired weight. The dough was proofed for 45 minutes at a temperature between 106°-110°F. The dough was baked at 390°F, with steam, for 36 minutes.

The proportions and constituents of this mixture may be varied. For example, the baker's percent of the wheat protein isolate product preferably ranges from about 39 to about 59, and more preferably ranges from about 44 to about 54. For another example, the baker's percent of the hydrolyzed wheat protein product preferably ranges from about .8 to about 1.2.

### EXAMPLE 27

### REDUCED-CARBOHYDRATE YEAST RAISED DONUTS

| **Ingredients** | **Weight % (Flour Weight Basis)** |
|---|---|
| Flour | 100.0 |
| Vital Wheat Gluten | 7.5 |
| Wheat Protein Isolate¹ | 5.0 |
| Resistant Starch² | 87.5 |
| Sugar | 18.8 |
| Shortening | 25.0 |
| Nonfat dry milk | 6.2 |
| Soy flour | 2.5 |
| Salt | 3.8 |
| Eggs | 2.5 |
| Baking powder | 2.5 |
| Yeast | 10.0 |
| Water | 112.5 |

| | |
|---|---|
| ¹ Arise™ 5000 available from MGP Ingredients. ² FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

All dry ingredients were mixed together and the water was added. The dough was mixed for one minute at low speed and 9 ½ minutes at medium speed in a Hobart mixer (Hobart Corp.) equipped with a dough hook. The dough was allowed to rest for one hour at room temperature. The dough was divided into pieces and allowed to rest for 15-20 minutes at room temperature. Dough pieces were rolled out and cut to desired weight with a donut cutter. The dough was proofed at 95-115°F for 25-35 minutes. The donuts were fried at 375°F for 45-60 seconds each side.

The proportions and constituents of this mixture may be varied. For example, the baker's percent of the resistant starch product preferably ranges from about 70 to about 105, and more preferably ranges from about 79 to about 96. For another example, the baker's percent of the wheat protein isolate product preferably ranges from about 4 to about 6.

### EXAMPLE 28

### REDUCED-CARBOHYDRATE FLOUR TORTILLA

| **Ingredients** | **Weight % (Flour Weight Basis)** |
|---|---|
| Tortilla Flour | 100.0 |
| Vital Wheat Gluten | 12.0 |
| Resistant Starch¹ | 88.0 |
| Wheat Protein Concentrate² | 6.0 |
| Salt | 3.0 |
| Sodium Bicarbonate | 1.2 |
| Sodium Stearoyl Lactylate | 1.0 |
| Potassium Sorbate | 0.8 |
| Sodium Propionate | 1.0 |
| Sodium Aluminum Sulfate | 1.16 |
| Fumaric Acid | 0.48 |
| Shortening | 12.0 |

| | |
|---|---|
| ¹ FiberStar 70 available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² FP 600 available from MGP Ingredients. | |

In this Example 28, the dry ingredients were mixed for 2 minutes at low speed in a Hobart mixer (Hobart Corp.) equipped with a paddle. Then, the shortening was added and mixed for another 6 minutes at low speed. Water at 95°F was added and mixed using a hook attachment for 1 minute at low speed and 4 minutes at medium speed. The dough was rested for 5 minutes in a proofing cabinet at 92-95°F and 70% relative humidity. After 5 minutes, dough balls were formed using a divider/rounder. The dough balls were rested again in the proofing cabinet (92-95°F and 70% relative humidity) for 10 minutes. Then, a hot press was used to press the dough balls into disks. The top and bottom platens of the hot press were set at 743°F with a dwell time of 1.35 seconds and pressure of 1100 psi. The disks were baked in a three-tier oven (350-360°F) for 30 seconds. The tortillas were then allowed to cool for 1.5 minutes, and placed inside a low-density polyethylene bag.

The proportions and constituents of this mixture may be varied. For example, the baker's percent of the resistant starch product preferably ranges from about 70 to about 106, and more preferably ranges from about 79 to about 97. For another example, the baker's percent of the wheat protein isolate product preferably ranges from about 5 to about 7.

### EXAMPLE 29

### REDUCED-CARBOHYDRATE WHITE BREAD

This Example involved the preparation of a reduced carbohydrate white bread. Among other things, the ingredients included a resistant starch product and a wheat protein isolate product. A full list of ingredients is set forth below:

| **Ingredients** | **Weight % (Flour Weight Basis)** |
|---|---|
| White Bread Flour | 100.0 |
| Vital Wheat Gluten | 60.0 |
| FiberStar 70¹ | 70.0 |
| Arise 5000² | 36.0 |
| Soy Fiber | 40.0 |
| Compressed Yeast | 36.7 |
| Salt | 5.8 |
| Vegetable Oil | 18.4 |
| Sucralose | 0.024 |
| Calcium Propionate | 0.8 |
| DATEM | 0.8 |
| EMG (Ethoxylated Mono-Diglycerides) | 1.1 |
| Sodium Stearoyl Lactylate | 0.8 |
| Ascorbic Acid | 0.046 |
| Sucrose | 2.3 |
| Water (Variable) | 232.6 |

| | |
|---|---|
| ¹Available from MGP Ingredients FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ²Available from MGP Ingredients. | |

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

The bread was made by conventional procedures for baking bread. The following general procedures were followed:
1. Mix 1 minute low speed, then mix 5 minutes high speed.
2. Dough temperature - 76°F, Pan dough scaling factor: 2.00.
3. Proof 1 hour - 112/108°F.
4. Bake at 410°F for 24 minutes.

### EXAMPLE 30

### REDUCED CARBOHYDRATE WHOLE WHEAT BREAD

This Example involved the preparation of a reduced carbohydrate whole wheat bread. Among other things, the ingredients included a resistant starch product and a wheat protein isolate product. A full list of ingredients is set forth below:

| **Ingredients** | **Weight % (Flour Weight Basis)** |
|---|---|
| Whole Wheat Flour | 100.0 |
| Vital Wheat Gluten | 60.0 |
| FiberStar 70¹ | 70.0 |
| Arise 5000² | 36.0 |
| Soy Fiber | 40.0 |
| Compressed Yeast | 36.7 |
| Salt | 5.8 |
| Vegetable Oil | 18.4 |
| Sucralose | 0.024 |
| Calcium Propionate | 0.8 |
| DATEM | 0.8 |
| EMG (Ethoxylated Mono-Diglycerides) | 1.1 |
| Sodium Stearoyl Lactylate | 0.8 |
| Ascorbic Acid | 0.046 |
| Sucrose | 0.8 |
| Water (Variable) | 232.6 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ²Available from MGP Ingredients. | |

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

The bread was made by conventional procedures for baking bread. The following general procedures were followed:
1. Mix 1 minute low speed, Mix 5 minutes high speed.
2. Dough temperature - 76°F, Pan dough scaling factor: 2.00.
3. Proof 1 hour - 112/108°F.
4. Bake at 410°F for 24 minutes.

### EXAMPLE 31

### REDUCED CARBOHYDRATE BAGEL

This Example involved the preparation of a reduced carbohydrate bagel. Among other things, the ingredients included a resistant starch product and a wheat protein isolate product. A full list of ingredients is set forth below:

| **Ingredients** | **Weight % (Flour Weight Basis)** |
|---|---|
| Whole Wheat Flour | 100.0 |
| Vital Wheat Gluten | 100.0 |
| FiberStar 70¹ | 66.7 |
| Arise 5000² | 33.3 |
| Soy Fiber | 33.3 |
| Compressed Yeast | 6.7 |
| Salt | 6.7 |
| Vegetable Oil | 6.7 |
| Calcium Propionate | 1.7 |
| Water | 223.3 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 10 to about 50.

The bagel was made by conventional procedures for baking bagels. The following general procedures were followed:
1. Mix dry ingredients for 1 minute at low speed.
2. Add remaining ingredients. Mix 1 minute at low speed, and 5-7 minutes at high speed.
3. Proof at 105°/95°F for 50 minutes.
4. Bake at 425°F for 15 minutes.

### EXAMPLE 32

### REDUCED CARBOHYDRATE FLOUR TORTILLA

This Example involved the preparation of a reduced carbohydrate flour tortilla. Among other things, the ingredients included a resistant starch product and a wheat protein isolate product. A full list of ingredients is set forth below:

| **Ingredients** | **Weight % (Flour Weight Basis)** |
|---|---|
| White Tortilla Flour | 100.0 |
| Vital Wheat Gluten | 100.0 |
| FiberStar 70¹ | 433.6 |
| Arise 5000² | 33.4 |
| Double Acting Baking Powder | 10.0 |
| Calcium Propionate | 1.7 |
| Salt | 11.7 |
| Sodium Stearoyl Lactylate | 3.3 |
| Coated Fumaric Acid | 2.3 |
| Vegetable Oil | 66.7 |
| Water | 366.8 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the baker's percent of the resistant starch product preferably ranges from about 330 to about 530, and more preferably ranges from about 380 to about 480. For another example, the baker's percent of the wheat protein isolate product preferably ranges from about 10 to about 50.

The tortilla was made by conventional procedures for baking tortillas. The following general procedures were followed:
1. Blend dry ingredients for 1 minute at low speed.
2. Add liquid ingredients.
3. Mix 1 minute at low speed, and 6 minutes at high speed.
4. Subdivide the dough, and flatten using a hot press.
5. Bake at 350-360°F for 30 seconds.

### EXAMPLE 33

### REDUCED CARBOHYDRATE ANGEL FOOD CAKE

This Example involved the preparation of a reduced carbohydrate angel food cake. Among other things, the ingredients included a resistant starch product. A full list of ingredients is set forth below:

| **Ingredients** | **#** | **% Weight (FiberStar 70/Gluten Blend Basis)** |
|---|---|---|
| Sucrose | 1 | 186.31 |
| Cream of Tartar | 2 | 5.02 |
| Salt | 3 | 5.02 |
| Sodium Propionate | 4 | 0.88 |
| Powdered Egg Whites | 5 | 42.91 |
| Fructose | 6 | 22.3 |
| Cold Water | 7 | 38.45 |
| Vanilla Flavor | 8 | 1.67 |
| FiberStar 70¹/gluten (88:12 blend) | 9 | 100.0 |
| Midsol 50 | 10 | 33.44 |
| Sucrose | 11 | 97.05 |

| | | |
|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight ratio of the blend of the resistant starch product and the gluten product preferably ranges from about 70:30 to about 95:5, and more preferably ranges from about 83:17 to about 93:7.

The cake was made by conventional procedures for baking angel food cake. The following general procedures were followed:
1. Dry blend ingredients 1-5 in 1^{st} speed thoroughly.
2. Add ingredients 6-8 and whip in speed 6 till desired specific gravity for control.
3. Blend ingredients 9-11 together well; add and incorporate in slow speed for 30 seconds.
4. Scale as desired and bake at 375° F for 27-30 minutes.

### EXAMPLE 34

### REDUCED CARBOHYDRATE WHITE CAKE

This Example involved the preparation of a reduced carbohydrate white cake. Among other things, the ingredients included a resistant starch product. A full list of ingredients is set forth below:

| **Ingredients** | **#** | **% Weight (FiberStar 70/Gluten Blend Basis)** |
|---|---|---|
| Sugar | 1 | 112.5 |
| Pregel 46 | 2 | 2.08 |
| Midsol 50 | 3 | 2.08 |
| FiberStar 70'/gluten (88:12 blend) | 4 | 100 |
| Capmul 25 | 5 | 16.67 |
| All Purpose Shortening | 6 | 22.92 |
| NFDM | 7 | 5.96 |
| MCP | 8 | 0.21 |
| Levair | 9 | 1.67 |
| Soda | 10 | 1.67 |
| Salt | 11 | 2.50 |
| Flavor (B&V) | 12 | 1.04 |
| Powdered Whites | 13 | 3.54 |
| Powdered Eggs | 14 | 8.75 |
| Water | 15 | 134.38 |

| | | |
|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight ratio of the blend of the resistant starch product and the gluten product preferably ranges from about 70:30 to about 95:5, and more preferably ranges from about 83:17 to about 93:7. The cake was made by conventional procedures for baking cake. The following general procedures were followed:
1. Mix ingredients together.
2. Mix 1 minute 1st speed and 2 minutes 2nd speed.
3. Mix 1 minute 1st speed, scrape bowl, mix 2 minutes 1st speed.
4. Scale 400g and bake at 350°F for 24-25 minutes.

### EXAMPLE 35

### REDUCED CARBOHYDRATE PANCAKES/WAFFLES

This Example involved the preparation of a reduced carbohydrate pancake/waffle. Among other things, the ingredients included a resistant starch product. A full list of ingredients is set forth below:

| **Ingredients** | **#** | **% Weight (FiberStar 70/Gluten Blend Basis)** |
|---|---|---|
| FiberStar 70¹/gluten (88:12 blend) | 1 | 100 |
| Sugar | 2 | 18.46 |
| Salt | 3 | 2.22 |
| Baking Powder | 4 | 3.25 |
| NFDM | 5 | 13.29 |
| Shortening | 6 | 9.75 |
| Butter-Vanilla Flavor | 7 | 0.74 |
| Water | 8 | 147.70 |
| Eggs | 9 | 51.70 |
| Oil | 10 | 14.77 |

| | | |
|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight ratio of the blend of the resistant starch product and the gluten product preferably ranges from about 70:30 to about 95:5, and more preferably ranges from about 83:17 to about 93:7. The pancake/waffle was made by conventional procedures for mixing and processing pancakes/waffles.

### EXAMPLE 36

### REDUCED CARBOHYDRATE MUFFIN

This Example involved the preparation of a reduced carbohydrate muffin. Among other things, the ingredients included a resistant starch product. A full list of ingredients is set forth below:

| **Ingredients** | **% Weight (FiberStar 70/Gluten Blend Basis)** |
|---|---|
| FiberStar 70¹/gluten (88:12 blend) | 100 |
| Vital Wheat Gluten | 1 |
| NFDM | 10 |
| Sucrose | 110 |
| Cake Shortening | 15 |
| Salt | 1.9 |
| Soda | 1.75 |
| SALP | 1.5 |
| MCP | 0.3 |
| Baking Powder | 0.3 |
| Pregel 40 | 5 |
| Flavor | 1 |
| Guar | 0.4 |
| SSL | 0.5 |
| Powdered Eggs | 22 |
| Water | 46 |
| Oil | 20 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

The proportions and constituents of this mixture may be varied. For example, the weight ratio of the blend of the resistant starch product and the gluten product preferably ranges from about 70:30 to about 95:5, and more preferably ranges from about 83:17 to about 93:7. The muffin was made by conventional procedures for baking muffin. The following general procedures were followed:
1. Mix 1 minute 1 st speed, 2 minutes 2nd speed.
2. Mix 1 minute 1st speed 1 minute 1st speed.
3. Scale 120g +/- 2g, of batter.
4. Bake at 375°F for 30-33 minutes.

### EXAMPLE 37

### REDUCED CARBOHYDRATE FRUITY CRUNCH BAR

This Example involved the preparation of a reduced carbohydrate fruity crunch bar. Among other things, the ingredients included a resistant starch product and a hydrolyzed wheat protein product. A full list of ingredients is set forth below:

| **Ingredients** | **% Batch** |
|---|---|
| FiberStar 70¹ | 15.11 |
| HWG 2009² | 3.36 |
| Almond Flour | 11.75 |
| Soy Protein Crisp | 11.01 |
| Chopped Almonds | 5.04 |
| Soy Nuts | 5.04 |
| Dried Fruit | 8.39 |
| Maltisweet B | 37.28 |
| Artificial Flavor | 1.00 |
| White Sugar Free Coating | 2.02 |

| | |
|---|---|
| ¹Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the percent of the resistant starch product preferably ranges from about 5 to about 25%, and more preferably ranges from about 10 to about 20%. For another example, the percent of the hydrolyzed wheat protein product preferably ranges from about 1 to about 5%.

The fruity crunch bar was made by conventional procedures for baking fruity crunch bars. The following general procedures were followed:
1. Blend all dry ingredients together.
2. Over high heat boil the Maltisweet for two minutes.
3. Pour over blended dry ingredients and mix together.
4. Roll mixed ingredients to desired thickness.
5. Dip or spread the melted white sugar free coating over the rolled bar.
6. Let cool and dry.

### EXAMPLE 38

### REDUCED CARBOHYDRATE COOKIE

This Example involved the preparation of a reduced carbohydrate cookie. Among other things, the ingredients included a resistant starch product, and a wheat protein isolate product. A full list of ingredients is set forth below:

| **Ingredients** | **#** | **% Batch** |
|---|---|---|
| FiberStar 70¹ | 1 | 25.01 |
| Vital Wheat Gluten | 2 | 4.55 |
| Arise 5000² | 3 | 3.23 |
| Midsol 46 | 4 | 3.41 |
| Artificial Flavor | 5 | 0.51 |
| Sodium Bicarbonate | 6 | 0.49 |
| Salt | 7 | 0.34 |
| Xanthan Gum | 8 | 0.23 |
| Acesulfame K | 9 | 0.02 |
| Sucralose | 10 | 0.01 |
| Butter Salted | 11 | 25.81 |
| Isomalt ST/F | 12 | 18.19 |
| Liquid Whole Egg | 13 | 10.12 |
| Maltisweet 3145 | 14 | 6.71 |
| Pure Vanilla Extract | 15 | 1.36 |

| | | |
|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ²Available from MGP Ingredients. | | |

The proportions and constituents of this mixture may be varied. For example, the percent of the resistant starch product preferably ranges from about 10 to about 40%, and more preferably ranges from about 20 to about 30%. For another example, the percent of the wheat protein isolate product preferably ranges from about 1 to about 5%.

The cookie was made by conventional procedures for baking cookies. The following general procedures were followed:
1. Blend ingredients 1-10 (Mix 1) together.
2. In separate bowl cream ingredients 11-12 (Mix 2). (Kitchen Aid - 5 quart)
3. Add ingredients 13-15 (Mix 3) to creamed mixture and mix until blended.
4. Slowly add Mix 1 to blended Mix 2 and Mix 3. Mix until all ingredients are blended together.
5. Scale dough into 30-33g balls.
6. Bake at 375°F for 13 minutes.

### EXAMPLE 39

### REDUCED CARBOHYDRATE BROWNIE

This Example involved the preparation of a reduced carbohydrate brownie. Among other things, the ingredients included a resistant starch product, a wheat protein isolate product and a hydrolyzed wheat protein product. A full list of ingredients is set forth below:

| **Ingredients** | **#** | **% Batch** |
|---|---|---|
| FiberStar 70¹ | 1 | 44.96 |
| Flax Flour | 2 | 5.00 |
| HWG 2009² | 3 | 3.50 |
| Arise 5000³ | 4 | 1.00 |
| Cocoa Powder | 5 | 5.99 |
| Jet Black Cocoa | 6 | 0.90 |
| Sodium Bicarbonate | 7 | 0.41 |
| Asesulfame K-Sweetener | 8 | 0.025 |
| Sucralose | 9 | 0.020 |
| Chocolate Flavor⁴ | 10 | 0.35 |
| Chocolate Flavor⁵ | 11 | 0.31 |
| Sodium Propionate | 12 | 0.17 |
| Salt | 13 | 0.70 |
| Dark Chocolate Pieces | 14 | 5.99 |
| Xanthan Gum | 15 | 1.00 |
| Liquid Whole Egg | 16 | 9.99 |
| Maltisweet 3145 | 17 | 9.09 |
| Pure Vanilla Extract | 18 | 1.32 |
| Vegetable Oil | 19 | 9.27 |
| Water | 20 | 52% of mix weight |

| | | |
|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. ³ Available from MGP Ingredients. ⁴ Art. Chocolate Fudge Flavor from Mother Murphy's. ⁵ Art. N&A Cocoa Enhancer from Mother Murphy's. | | |

The proportions and constituents of this mixture may be varied. For example, the percent of the resistant starch product preferably ranges from about 15 to about 75%, and more preferably ranges from about 35 to about 55%. For another example, the percent of the wheat protein isolate product preferably ranges from about 0.5 to about 2.0% and the percent of the hydrolyzed wheat protein product ranges from about 1 to about 5%.

The brownie was made by conventional procedures for baking brownies. The following general procedures were followed:
1. Mix ingredients 1-15 (Mix 1) together until well blended.
2. In a separate bowl mix ingredients 16-20 (Mix 2) together.
3. Combine Mix 1 into Mix 2.
4. Mix until well blended, approx. 2 minutes on low speed.
5. Scale weight: 700g, in a 9X9 pan.
6. Bake at 375°F for 22 minutes.

### EXAMPLE 40

### REDUCED CARBOHYDRATE SNACK PELLET - INDIRECT EXPANDED SNACK

This Example involved the preparation by conventional procedures of four snack pellet formulas - indirect expanded snack. Among other things, the ingredients included a resistant starch product. A full list of ingredients is set forth below:

| **Ingredients** | **% Batch** | | | |
|---|---|---|---|---|
| Tapioca Starch | 30 | 18 | 6 | 0 |
| FiberStar 70¹ | 0 | 12 | 24 | 12 |
| Midsol 1 | 0 | 0 | 0 | 18 |
| Wheat Flour | 58 | 58 | 58 | 58 |
| Corn Flour | 10 | 10 | 10 | 10 |
| Monoglyceride | 0.5 | 0.5 | 0.5 | 0.5 |
| Salt | 1 | 1 | 1 | 1 |
| Sodium Bicarbonate | 0.5 | 0.5 | 0.5 | 0.5 |

| | | | | |
|---|---|---|---|---|
| ¹Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | | | |

The proportions and constituents of this mixture may be varied. For example, the percent of the resistant starch product preferably ranges from about 5 to about 40, and more preferably ranges from about 10 to about 30.

Indirect expanded snack (snack pellets) was produced using a Wenger TX-57 twin-screw extruder. The preconditioner discharge temperature is 89-91°C, shaft speed is 160 rpm, temperature is 60-65° C, and head pressure is 300-350 psi. Snack pellets can be puffed either using hot air or frying oil.

### EXAMPLE 41

### REDUCED CARBOHYDRATE EXTRUDED BREAKFAST CEREAL

This Example involved the preparation by conventional procedures of an extruded breakfast cereal using seven formulas. Among other things, the ingredients included a resistant starch product. A full list of ingredients is set forth below:

| **Ingredients** | **% Batch** | | | | | | |
|---|---|---|---|---|---|---|---|
| Wheat Flour | 30 | 18 | 6 | 26 | 22 | 16 | 2 |
| FiberStar 70¹ | 0 | 12 | 24 | 12 | 24 | 0 | 0 |
| High-Amylose Maize | 0 | 0 | 0 | 0 | 0 | 14 | 28 |
| Corn Flour | 42 | 42 | 42 | 38 | 34 | 42 | 42 |
| Oat Flour | 20 | 20 | 20 | 16 | 12 | 20 | 20 |
| Sugar | 6 | 6 | 6 | 6 | 6 | 6 | 6 |
| Salt | 2 | 2 | 2 | 2 | 2 | 2 | 2 |

| | | | | | | | |
|---|---|---|---|---|---|---|---|
| ¹Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | | | | | | |

The proportions and constituents of this mixture may be varied. For example, the percent of the resistant starch product preferably ranges from about 5 to about 40, and more preferably ranges from about 10 to about 30.

A Wenger TX-57 twin-screw extruder was used to produce the breakfast cereal. Extrusion conditions include shaft speed of 350-400 rpm, temperature of 90° C, and head pressure of 3800-4700 kPa.

### EXAMPLE 42

### REDUCED CARBOHYDRATE CORN CURL - DIRECT EXPANDED SNACK

This Example involved the preparation by conventional procedures of six corn curl formulas - direct expanded snack. Among other things, the ingredients included a resistant starch product in varying percentages, as shown below.

| **Ingredients** | **% Weight Basis** | | | | | |
|---|---|---|---|---|---|---|
| Corn Meal | 100 | 88 | 75 | 64 | 50 | 25 |
| FiberStar 70¹ | 0 | 12 | 25 | 36 | 50 | 75 |

| | | | | | | |
|---|---|---|---|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | | | | | |

The proportions and constituents of this mixture may be varied. For example, the percent of the resistant starch product preferably ranges from about 5 to about 85, and more preferably ranges from about 10 to about 80.

Corn curls were produced in a Wenger TX-57 twin-screw extruder using the following conditions: shaft speed, 350-450 rpm; temperature, 80-90°C, head pressure, 4600-6600 kPa.

### EXAMPLE 43

### REDUCED CARBOHYDRATE SNACK CRACKER

Using the formulation set forth below, snack crackers were prepared by conventional procedures with a resistant starch product and a wheat protein isolate product in varying proportions.

| **Ingredients** | **Weight % (Flour Weight Basis)** | | |
|---|---|---|---|
| Flour, Cookie (F-1) | 100.0 | 100.0 | 100.0 |
| FiberStar 70¹ | | 20.5 | 52.5 |
| Arise 5000² | | 2.1 | 5.2 |
| Shortening, All-Purpose | 12.0 | 14.7 | 18.9 |
| Sugar, Granulated | 8.0 | 9.8 | 12.6 |
| Malt, Non-diastatic | 0.5 | 0.6 | 0.8 |
| Whey | 1.5 | 1.8 | 2.4 |
| Salt | 1.0 | 1.2 | 1.6 |
| Sodium Bicarbonate | 0.5 | 0.6 | 0.8 |
| Yeast, Fresh Compressed | 0.25 | 0.3 | 0.4 |
| Water (90°F) | 28.0 | 34.3 | 44.2 |
| Ammonium Bicarbonate | 1.0 | 1.2 | 1.6 |
| Sodium Sulfite | 0.04 | 0.05 | 0.06 |

| | | | |
|---|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | | | |

The proportions and constituents of this mixture may be varied. For example, the baker's percent of the resistant starch product preferably ranges from about 5 to about 70, and more preferably ranges from about 10 to about 60. For another example, the baker's percent of the wheat protein isolate product preferably ranges from about 1 to about 6.

The snack cracker was made by conventional procedures for baking snack cracker. The following general procedures were followed:
1. Add all ingredients, and mix for 10-15 minutes at first speed.
2. Sheet to 2mm thickness, final gauge roll setting of 34.
3. Bake for approximately 6.25 minutes using the following temperature settings:

| | | |
|---|---|---|
| Zone 1 | 470°F Top | 450°F Bottom |
| Zone 2 | 495°F Top | 420°F Bottom |
| Zone 3 | 450°F Top | 380°F Bottom |

### EXAMPLE 44

### REDUCED CARBOHYDRATE PASTA

Using a conventional pasta formulation and conventional preparation procedures, semolina-based pastas were prepared with varying percentages of spinach powder, a resistant starch product and a wheat protein isolate product. The total dietary fiber (TDF) contents by AOAC method 991.43 of these pastas are tabulated below:

### TOTAL DIETARY FIBER (TDF) CONTENT OF PASTA

| **Pasta Formula** | **TDF %** |
|---|---|
| 100% Semolina (Control) | 4.9 |
| 94.8% Semolina 5.2% Spinach Powder | 6.6 |
| 89.3% Semolina | 11.6 |
| 1.8% Pasta Power¹ | |
| 8.9% FiberStar 70² | |
| 85.1% Semolina | 11.8 |
| 4.7% Spinach Powder | |
| 1.7% Pasta Power¹ | |
| 8.5% FiberStar 70² | |
| 35.0% Semolina | 27.7 |
| 12.6% Vital Wheat Gluten | |
| 2.0% Pasta Power¹ | |
| 50.4% FiberStar 70² | |

| | |
|---|---|
| ¹ Available from MGP Ingredients. ² Available from MGP Ingredients FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | |

The proportions and constituents of this mixture may be varied. For example, the percent of the resistant starch product preferably ranges from about 2 to about 65, and more preferably ranges from about 5 to about 55. For another example, the percent of the wheat protein isolate product preferably ranges from about 1 to about 3.

The pasta was made by conventional procedures for making pasta. The pilot plant facility of a large pasta company was used to produce the pasta.

### EXAMPLE 45

### REDUCED CARBOHYDRATE FLOUR TORTILLA

Using the formulation set forth below, flour tortillas were prepared by conventional procedures with two wheat protein concentrates and a resistant starch product in varying proportions. A full list of ingredients is set forth below.

| **Ingredients** | **Weight % (Flour Weight Basis)** | | |
|---|---|---|---|
| Flour | 100.0 | 100.0 | 100.0 |
| FiberStar 70¹ | - | 14.9 | 36.4 |
| FP 300 | - | 2.1 | 5.0 |
| FP 600 | - | 1.2 | 4.4 |
| Salt | 1.5 | 1.8 | 2.2 |
| Sodium Stearoyl Lactylate | 0.5 | 0.6 | 0.7 |
| Potassium Sorbate | 0.4 | 0.5 | 0.6 |
| Sodium propionate | 0.5 | 0.6 | 0.7 |
| Baking Soda | 0.6 | 0.7 | 0.9 |
| Sodium Aluminum Sulfate | 0.58 | 0.69 | 0.85 |
| Fumaric acid | 0.46 | 0.54 | 0.67 |
| Cysteine | 0.003 | 0.004 | 0.004 |
| Shortening | 6.0 | 7.1 | 8.8 |
| Water | 53.0 | 62.6 | 77.3 |

| | | | |
|---|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | | |

The proportions and constituents of this mixure may be varied. For example, the baker's percent of the resistant starch product preferably ranges from about 5 to about 50, and more preferably ranges from about 10 to about 40. For another example, the baker's percent of a first wheat protein concentrate preferably ranges from about 1 to about 6. In yet another example, the baker's percent of a second wheat protein concentrate preferably ranges from about 0.5 to about 5.0.

### PROCEDURES:

1. Mix dry ingredients for 2 minutes at low speed.
2. Add the shortening and mix at low speed for 6 minutes.
3. Add the water, and mix for 1 minute at low speed and then mix for 4 minutes at medium speed.
4. The dough was rested for 5 minutes in a chamber at 35°C and 70% relative humidity.
5. Dough balls were made, and placed in the chamber again for 10 minutes.
6. The dough balls were hot-pressed at 395°C and 1100 psi for 1.35 seconds.
7. The flattened doughs were baked into a tortilla using a three-tier oven at 350°-360°F for a dwell time of 30 seconds.

### EXAMPLE 46

### REDUCED CARBOHYDRATE

### PEANUT BUTTER COOKIE

This Example involved the preparation by conventional procedures of a reduced carbohydrate peanut butter cookie product. Among other things, the ingredients included a resistant starch product and a wheat protein isolate product. A full list of ingredients is set forth below:

| **Ingredients** | **Supplier** | **% Batch** |
|---|---|---|
| 1. FiberStar 70¹ | MGP Ingredients | 18.09 |
| 2. Arise 8000 | MGP Ingredients | 2.01 |
| 3. Baking Powder | Kraft | 0.55 |
| 4. Salt | | 0.16 |
| 5. Acesulfame K | Nutrinova | 0.02 |
| 6. Sucralose (Splenda) | Splenda McNeil Nutritionals | 0.01 |
| 7. Xanthan Gum | | 0.18 |
| 8. All Purpose Shortening | | 16.12 |
| 9. Isomalt | Palatinit | 30.74 |
| 10. Peanut Butter | Jiff | 17.59 |
| 11. Liquid Whole Egg | | 14.21 |
| 12. Single Fold Pure Vanilla Extract | Dawn Food Products | 0.31 |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight percent of the wheat protein isolate product preferably ranges from about 8 to about 14 based on the weight of the resistant starch product, and more preferably ranges from about 10 to about 12 based on the weight of the resistant starch product. For another example, flour may be present in an amount preferably 40 by weight or less based on the weight of the resistant starch product and more preferably 10 or less based on the weight of the resistant starch product.

### PROCEDURES:

1) Blend ingredients 1-7 together.
2) In separate bowl cream ingredients 8-10.
3) Add ingredients 11 and 12 to creamed mixture and mix until well blended.
4) Slowly add step 1 to blended steps 2 and 3. Mix for 3 minutes.
5) Scale dough into 30g balls.
6) Bake at 350°F for 10-12 minutes in a convection oven.

### EXAMPLE 47

### REDUCED CARBOHYDRATE SUGAR COOKIE

This Example involved the preparation by conventional procedures of a reduced carbohydrate sugar cookie product. Among other things, the ingredients included a resistant starch product and a wheat protein isolate product. A full list of ingredients is set forth below:

| **Ingredients** | **Supplier** | **% Batch** |
|---|---|---|
| 1. FiberStar 70¹ | MGP Ingredients | 38.99 |
| 2. Arise 8000 | MGP Ingredients | 4.52 |
| 3. Litesse II | Danisco | 0.55 |
| 4. Baking Soda | | 0.48 |
| 5. Cream of Tartar | | 0.45 |
| 6. Acesulfame K | Nutrinova | 0.02 |
| 7. Sucralose (Splenda) | Splenda McNeil Nutritiorials | 0.01 |
| 8. Xanthan Gum | TIC Gums | 0.14 |
| 9. Margarine | Sysco (Classic) | 25.02 |
| 10. Isomalt | Palatinit | 23.85 |
| 11. Liquid Whole Egg | | 5.51 |
| 12. Single Fold Pure Vanilla Extract | Dawn Food Products | 0.48 |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight percent of the wheat protein isolate product preferably ranges from about 9 to about 14 based on the weight of the resistant starch product, and more preferably ranges from about 10 to about 13 based on the weight of the resistant starch product.

### PROCEDURES:

1) Blend ingredients 1-8 together.
2) In separate bowl cream ingredients 9 and 10.
3) Add ingredients 11 and 12 to creamed mixture and mix until well blended.
4) Slowly add step 1 to blended steps 2 and 3. Mix for 3 minutes.
5) Scale dough into 30g balls.
6) Bake at 350°F for 10-13 minutes in a convection oven.

### EXAMPLE 48

### REDUCED CARBOHYDRATE COOKIE

This Example involved the preparation by conventional procedures of a reduced carbohydrate cookie product. Among other things, the ingredients included a resistant starch product and a wheat protein isolate product. A full list of ingredients is set forth below:

| **Ingredients** | **Supplier** | **% Batch** |
|---|---|---|
| 1. FiberStar 70¹ | MGP Ingredients | 26.17 |
| 2. Vital Wheat Gluten | MGP Ingredients | 4.42 |
| 3. Arise 5000 | MGP Ingredients | 3.13 |
| 4. Midsol 46 | MGP Ingredients | 1.44 |
| 5. Artificial Flavor (Brown Sugar Flavor) | Mother Murphy's | 0.49 |
| 6. Sodium Bicarbonate | | 0.39 |
| 7. Baking Powder | Kraft | 0.18 |
| 8. Salt | | 0.34 |
| 9. Xanthan Gum | TIC Gums | 0.19 |
| 10 Acesulfame K | Nutrinova | 0.02 |
| 11 Sucralose (Splenda) | Splenda McNeil Nutritiorials | 0.01 |
| 12. Butter Salted | Sysco | 25.06 |
| 13. Isomalt | Palatinit | 17.66 |
| 14. Liquid Whole Egg | | 12.66 |
| 15. Maltisweet 3145 | SPI Polyols | 6.52 |
| 16. Pure Vanilla Extract | Dawn Food Products | 1.32 |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight percent of the wheat protein isolate product preferably ranges from about 9 to about 15 based on the weight of the resistant starch product, and more preferably ranges from about 11 to about 13 based on the weight of the resistant starch product.

### PROCEDURES:

1) Blend ingredients 1-11 together.
2) In separate bowl cream ingredients 12 and 13.
3) Add ingredients 14-16 to creamed mixture and mix until well blended.
4) Slowly add step 1 to blended steps 2 and 3. Mix for 3 minutes.
5) Scale dough into 30g balls.
6) Bake at 375°F for 10 minutes
7) For frozen cookie puck, bake at 300°F for 18-20 minutes.

### EXAMPLE 49

### REDUCED CARBOHYDRATE CAKE DONUT

This Example involved the preparation by conventional procedures of a reduced carbohydrate cake donut product. Among other things, the ingredients included a resistant starch product and a wheat protein isolate product. A full list of ingredients is set forth below:

| **Ingredients** | **Supplier** | **% Batch** |
|---|---|---|
| 1. FiberStar 70¹ | MGP Ingredients | 27.20 |
| 2. Flour | General Mills | 19.32 |
| 3. Isomalt | Palatinit | 15.01 |
| 4. Pastry Flour | General Mills | 14.45 |
| 5. Soybean Oil | | 3.52 |
| 6. Lecithinated Soya Flour | ADM | 2.98 |
| 7. Vital Wheat Gluten | MGP Ingredients | 2.39 |
| 8. Arise 5000 | MGP Ingredients | 2.39 |
| 9. Dried Egg Yolks | | 2.09 |
| 10. Nonfat Dried Milk High Heat | | 1.76 |
| 11. SAPP 37 | Rhodia | 0.68 |
| 12. SAPP 28 | Rhodia | 0.34 |
| 13. SAPP 40 | Rhodia | 0.34 |
| 14. Salt | | 1.19 |
| 15. Sodium Caseinate | | 1.19 |
| 16. Corn Flour | | 1.19 |
| 17. Sodium Bicarbonate | | 0.92 |
| 18. Pregel 10 | MGP Ingredients | 0.89 |
| 19. Cake Donut Flavoring | International Flavoring | 0.42 |
| 20. Ground Nutmeg | | 0.36 |
| 21. Carboxymethyl Cellulose | | 0.06 |
| 22. Monocalcium Phosphate | | 0.06 |
| 23. Acesulfame K (Sunnett) | Nutrinova | 0.02 |
| 24 Sucralose (Splenda) | Splenda McNeil Nutritiorials | 0.01 |
| 25. Sodium Caseinate | | 1.19 |
| TOTAL | | 100.00 |
| | 55% addition of water on dry weight basis. | |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 110 to about 170, and more preferably ranges from about 125 to about 155. For another example, the baker's percent of the wheat protein isolate product preferably ranges from about 10 to about 15.

### PROCEDURES:

1) Blend all dry ingredients together until well blended.
2) Add oil and water to dry mix.
3) Mix until well blended, approx. 1 min. on low speed.
4) Mix for 1 and 30 seconds on speed 2 (scraping at 45 seconds).
5) Let batter rest covered for 6 minutes. Final batter temp (76°F).
6) Fry deposited donuts at 375°F. One minute per side.

### EXAMPLE 50

### REDUCED CARBOHYDRATE BROWNIE

This Example involved the preparation by conventional procedures of a reduced carbohydrate brownie product. Among other things, the ingredients included a resistant starch product and a wheat protein isolate product. A full list of ingredients is set forth below:

| **Ingredients** | **Supplier** | **% Batch** |
|---|---|---|
| 1. Isomalt | Palatinit | 17.27 |
| 2. Sucrose | C&H | 17.27 |
| 3. Cocoa Powder | Guittard Dutch Cocoa-Dawn Food Products | 9.57 |
| 4. Pastry Flour | Golden Shield - General Mills | 7.45 |
| 5. FiberStar 70¹ | MGP Ingredients | 6.09 |
| 6. Arise 5000 | MGP Ingredients | 0.80 |
| 7. Vital Wheat Gluten | MGP Ingredients | 0.57 |
| 8. Salt | | 0.25 |
| 9. Baking Powder | Kraft | 0.22 |
| 10. Acesulfame K | Chem Point | 0.02 |
| 11. Sucralose | Splenda McNeil Nutritiorials | 0.01 |
| 12. Melted Butter | Sysco | 19.88 |
| 13. Liquid Whole Egg | | 19.64 |
| 14. Pure Vanilla Extract | Dawn Food Products | 0.96 |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 60 to about 100, and more preferably ranges from about 70 to about 90. For another example, the baker's percent of the wheat protein isolate product preferably ranges from about 8 to about 13.

### PROCEDURES:

1) Mix ingredients 1-11 together until well blended.
2) Mix ingredients 12-14 into step 1.
3) Mix until well blended, approx. 1 min. on low speed.
4) Scale weight 450g, in a 9x9 greased pan.
5) Bake at 350°F for 25 minutes.

### EXAMPLE 51

### REDUCED CARBOHYDRATE EGG ROLL WRAPPER

This Example involved the preparation by conventional procedures of a reduced carbohydrate egg roll wrapper product. Among other things, the ingredients included a resistant starch product and a wheat protein isolate product. A full list of ingredients is set forth below:

| **Ingredients** | **Supplier** | **% Batch** |
|---|---|---|
| FiberStar 70' | MGP Ingredients | 36.67 |
| Water | | 33.46 |
| Enriched Flour | General Mills | 13.34 |
| Vital Wheat Gluten | MGP Ingredients | 10.00 |
| Arise 5000 | MGP Ingredients | 1.96 |
| Salt | | 1.60 |
| Whole Egg Powder | Henningsen | 1.58 |
| Whey | Land O'Lakes | 1.29 |
| Sodium Benzoate | | 0.1 |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 220 to about 330, and more preferably ranges from about 250 to about 300. For another example, the baker's percent of the wheat protein isolate product preferably ranges from about 11 to about 18.

### PROCEDURES:

1) Blend all dry ingredients together.
2) Add water and mix until blended.
3) Knead 3 minutes (Kitchen Aid 5qt Mixer).
4) Roll dough out to desired thickness, and cut to specified size.

### EXAMPLE 52

### REDUCED CARBOHYDRATE WHITE LAYER CAKE

This Example involved the preparation by conventional procedures of a reduced carbohydrate white layer cake product. Among other things, the ingredients included a resistant starch product. A full list of ingredients is set forth below:

| **Ingredients** | **Supplier** | **% Batch** |
|---|---|---|
| 1. Cake Flour | MGP Ingredients, Inc. | 12.56 |
| 2. FiberStar 70' | MGP Ingredients, Inc. | 11.07 |
| 3. Vital Wheat Gluten | | 3.33 |
| 4. Pregel 40 | MGP Ingredients, Inc. | 0.68 |
| 5. Nonfat Dry Milk-High Heat | | 2.31 |
| 6. Cake Shortening-White Plume | Bunge | 9.06 |
| 7. Baking Powder | Clabber Girl | 1.26 |
| 8. Salt | | 0.55 |
| 9. Artificial Flavor-No Spice Cake Flavor | International Bakeries | 0.48 |
| 10. Dry Whole Eggs | | 3.36 |
| 11. Isomalt | Palatinit | 13.32 |
| 12. Erythritol-Eridex | Cerestar | 10.84 |
| 13. Sucralose (Splenda) | McNeil Nutritiorials | 0.01 |
| 14. Acesulfame K (Sunnett) | Nutrinova | 0.02 |
| 15. Polydextrose-Litesse II | Danisco | 2.48 |
| 16. Water | | 28.67 |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 70 to about 110, and more preferably ranges from about 80 to about 100.

### PROCEDURES:

1) Blend all dry ingredients together until well blended.
2) Add shortening to dry mix.
3) Mix until well blended.
4) Add 60% of water to dry ingredients and mix for 2 minutes on low.
5) Add the final 40% of water and mix for 3 minutes on medium speed.
6) Deposit 400g of batter into an 8" round pan and bake for 22 minutes at 350°F.

### EXAMPLE 53

### REDUCED-CARBOHYDRATE FROZEN DESSERT

This Example involved the preparation by conventional procedures of a reduced carbohydrate frozen dessert product. Among other things, the ingredients included a resistant starch product. A full list of ingredients is set forth below:

| **Ingredients** | **Supplier** | **% Batch** |
|---|---|---|
| Whole Milk | Roberts Dairy | 57.60 |
| Cream (40%) | Roberts Dairy | 22.50 |
| Sucrose | Best Choice | 10.00 |
| Corn Syrup Solids (36 DE) | Cerestar USA | 4.50 |
| Non Fat Dry Milk | Best Choice | 2.00 |
| FiberStar 70¹ | MGP Ingredients | 3.00 |
| Stabilizer - Emulsifier Blend | Continental Colloids | 0.40 |
| Annatto Color | Chr. Hansen | 0.25 ml/ 1000g |
| Vanilla Flavor (4x) | Danisco | 2.5 ml/ 1000g |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight percent of the resistant starch product preferably ranges from about 1 to about 6, and more preferably ranges from about 2 to about 4.

### PROCEDURES:

1) Blend dry ingredients.
2) Add dry ingredients to luke warm milk (110°F) while constantly agitating.
3) Heat up to 140°F and homogenize at 2000 psi (1^{st} stage) and 500 psi (2^{nd} stage).
4) Pasteurize up to 180°F for 25 sec.
5) Cool to 40°F. Add color and flavor. Mix well.
6) Freeze till draw temperature reaches 21-22°F or ∼100% overrun.
7) Pack in cups.
8) Transfer for hardening at -13 to -19°F for 24 h.

### EXAMPLE 54

### REDUCED-CARBOHYDRATE CULTURED DAIRY PRODUCT

This Example involved the preparation by conventional procedures of a reduced carbohydrate cultured dairy product. Among other things, the ingredients included a resistant starch product. A full list of ingredients is set forth below:

| **Ingredients** | **Supplier** | **% Batch** |
|---|---|---|
| Whole Milk | Roberts Dairy | 87.50 |
| Sucrose | Best Choice | 8.00 |
| FiberStar 70' | MGP Ingredients | 2.00 |
| Non fat Dry Milk | Best Choice | 1.00 |
| Yogurt Culture | Dannon | 1.00 |
| Gelatin | Knox Gelatin Inc. | 0.50 |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight percent of the resistant starch product preferably ranges from about 0.5 to about 5, and more preferably ranges from about 1 to about 3.

### PROCEDURES:

1) Blend dry ingredients.
2) Add dry ingredients to luke warm milk (110°F) while constantly agitating.
3) Heat up to 140°F and homogenize at 2000 psi (1^{st} stage) and 500 psi (2^{nd} stage).
4) Pasteurize up to 197-203°F for 5 minutes.
5) Cool to 118°F and add culture. Mix well.
6) Quickly fill cups.
7) Incubate at 109°F.
8) Break acidity until pH is 4.3 - 4.5.
9) Cool to 40-42°F.

### EXAMPLE 55

### REDUCED-CARBOHYDRATE YOGURT

This Example involved the preparation by conventional procedures of a reduced carbohydrate yogurt product. Among other things, the ingredients included a resistant starch product. A full list of ingredients is set forth below:

| **Ingredients** | **Supplier** | **% Batch** |
|---|---|---|
| Whole Milk | Roberts Dairy | 86.50 |
| Sucrose | Best Choice | 8.00 |
| FiberStar 70¹ | MGP Ingredients | 1.00 |
| Non fat Dry Milk | Best Choice | 3.00 |
| Yogurt Culture | Dannon | 1.00 |
| Gelatin | Knox Gelatin Inc. | 0.50 |
| TOTAL | | 100.00 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the weight percent of the resistant starch product preferably ranges from about 0.5 to about 4, and more preferably ranges from about 0.8 to about 3.

### PROCEDURES:

1) Blend dry ingredients.
2) Add dry ingredients to luke warm milk (110°F) while constantly agitating.
3) Heat up to 140°F and homogenize at 2000 psi (1^{st} stage) and 500 psi (2^{nd} stage).
4) Pasteurize up to 197-203°F for 5 minutes.
5) Cool to 118°F and add culture. Mix well.
6) Quickly fill cups.
7) Incubate at 109°F.
8) Break acidity until pH is 4.3 - 4.5.
9) Cool to 40-42°F.

### EXAMPLE 56

### REDUCED-CARBOHYDRATE NON DAIRY COFFEE CREAMER

This Example involved the preparation by conventional procedures of a reduced carbohydrate non-dairy coffee creamer product. Among other things, the ingredients included a deamidated wheat protein product. A full list of ingredients is set forth below:

| **Ingredients** | **Supplier** | **% Batch** |
|---|---|---|
| Water | | 75.55 |
| Partially Hydrogenated Soybean Oil | Best Choice | 11.00 |
| Corn syrup Solids (36 DE) | Tate & Lyle | 10.00 |
| WPI 2100 | MGP Ingredients | 3.00 |
| Dipotassium Phosphate | Astaris | 0.30 |
| Mono and Diglyceride Blend | ADM | 0.10 |
| Carrageenan | Main Street Ingredients | 0.05 |
| TOTAL | | 100.00 |

The proportions and constituents of this mixture may be varied. For example, the weight percent of the deamidated wheat protein product preferably ranges from about 1 to about 5, and more preferably ranges from about 2 to about 4.

### PROCEDURES:

1) Blend all dry ingredients (except emulsifier).
2) Add luke warm water to the dry blend and mix well.
3) Add emulsifier to shortening and heat it to melt.
4) Add melted shortening to step 2 and heat up to 140°F.
5) Homogenize at 5000 psi.
6) Pasteurize at 175°F, no hold.
7) Fill in 12 oz. bottles and transfer to cooler.
8) Store at 38 °F.

### EXAMPLE 57

### REDUCED-CARBOHYDRATE NUTRITIONAL BEVERAGE

This Example involved the preparation by conventional procedures of a reduced carbohydrate nutritional beverage product. Among other things, the ingredients included a hydrolyzed wheat protein product. A full list of ingredients is set forth below:

| **Ingredients** | **Supplier** | **% Batch** |
|---|---|---|
| Water | | 76.11 |
| Sucralose | Splenda | 4.50 |
| Cream (40%) | Anderson Erickson Dairy Co. | 7.61 |
| Whey Protein Concentrate, 34% | Land O'Lakes | 4.06 |
| NFDM - Low Heat | Best Choice | 4.53 |
| HWG 2009 | MGP Ingredients | 2.00 |
| Dutch Cocoa Powder | Dawn Foods (Guittard Cocoa) | 1.00 |
| Sodium Tri-Polyphosphate | Astaris | 0.10 |
| Kappa-2-Carrageenan | Main Street Ingredients | 0.06 |
| Mono and Diglycerides | ADM | 0.03 |
| Vitamins Premix | | 1305mg/ 300ml |
| Chocolate Flavor | | as desired |
| TOTAL | | 100.00 |

The proportions and constituents of this mixture may be varied. For example, the weight percent of the hydrolyzed wheat protein product preferably ranges from about 0.5 to about 4, and more preferably ranges from about 1 to about 3.

### PROCEDURES:

1) Blend all dry ingredients together.
2) Mix cream in water and heat up to 120°F.
3) Disperse dry ingredients into cream-water mixture.
4) Heat up to 140°F.
5) Homogenize at 6000 psi.
6) Pasteurize at 175°F, no hold.
7) Fill containers.
8) Store at 38°F.

### EXAMPLE 58

### REDUCED-CARBOHYDRATE TEMPURA BATTER

This Example involved the preparation by conventional procedures of a reduced carbohydrate tempura batter product. Among other things, the ingredients included a resistant starch product and a wheat protein isolate product. A full list of ingredients is set forth below:

| **Ingredients** | **% Batch** |
|---|---|
| FiberStar 70¹ | 68.2 |
| Arise™ 5000² | 8.6 |
| Midset 30 | 18.0 |
| Baking Powder | 2.0 |
| Dried Whole Egg | 3.0 |
| Salt | 0.2 |
| TOTAL | 100.00 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the weight percent of the wheat protein isolate product preferably ranges from about 10 to about 17 based on the weight of the resistant starch product, and more preferably ranges from about 12 to about 15 based on the weight of the resistant starch product.

### PROCEDURE:

1) Sift above mix through 20 mesh.
2) Add 140 parts of water and mix well until well dispersed.

### EXAMPLE 59

### REDUCED-CARBOHYDRATE WHITE GRAVY MIX

This Example involved the preparation by conventional procedures of a reduced carbohydrate white gravy mix product. Among other things, the ingredients included a resistant starch product and a wheat protein isolate product. A full list of ingredients is set forth below:

| **Ingredients** | **% Batch** |
|---|---|
| Midsol 46 | 35.00 |
| FiberStar 70¹ | 17.60 |
| Arise^{™} 5000² | 2.40 |
| Spray Dried Fat | 16.00 |
| Butter Flavor | 0.20 |
| Salt | 7.00 |
| Whey Protein Concentrate | 6.00 |
| NFDM | 7.00 |
| Maltodextrins 10 DE | 8.60 |
| White Pepper | 0.20 |
| TOTAL | 100.00 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the weight percent of the wheat protein isolate product preferably ranges from about 10 to about 17 based on the weight of the resistant starch product, and more preferably ranges from about 12 to about 15 based on the weight of the resistant starch product.

### PROCEDURE:

1) Mix all dry ingredients until uniform.
2) Mix all ingredients with water. (10 parts dry mix to 100 parts water)
3) Heat until boiling, let cool to serve.

### EXAMPLE 60

### REDUCED-CARBOHYDRATE COUNTRY GRAVY MIX

This Example involved the preparation by conventional procedures of a reduced carbohydrate country gravy mix product. Among other things, the ingredients included a resistant starch product and a wheat protein isolate product. A full list of ingredients is set forth below:

| **Ingredients** | **% Batch** |
|---|---|
| Midsol 46 | 32.00 |
| FiberStar 70¹ | 19.20 |
| Arise^{™} 5000² | 2.60 |
| Spray Dried Fat | 16.00 |
| Meat Flavor | 6.70 |
| Hydrolyzed Veg. Protein | 6.27 |
| Whey Protein Concentrate | 6.27 |
| Salt | 7.23 |
| MSG | 2.76 |
| Onion Powder | 0.60 |
| White Pepper | 0.12 |
| Black Pepper | 0.10 |
| Garlic | 0.15 |
| TOTAL | 100.00 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the weight percent of the wheat protein isolate product preferably ranges from about 10 to about 17 based on the weight of the resistant starch product, and more preferably ranges from about 12 to about 15 based on the weight of the resistant starch product.

### PROCEDURE:

1) Mix all dry ingredients until uniform.
2) Mix all ingredients with water. (10 parts dry mix to 100 parts water)
3) Heat until boiling, let cool to serve.

### EXAMPLE 61

### REDUCED-CARBOHYDRATE FISH ADHESION BATTER

This Example involved the preparation by conventional procedures of a reduced carbohydratefish adhesion batter product. Among other things, the ingredients included a resistant starch product and a wheat protein isolate product. A full list of ingredients is set forth below:

| **Ingredients** | **% Batch** |
|---|---|
| Midsol 701 | 75.0 |
| FiberStar 70¹ | 17.3 |
| Arise^{™} 5000² | 2.3 |
| Soda | 0.5 |
| SAP | 0.7 |
| Salt | 4.0 |
| CMC | 0.2 |
| Water | 130 parts/100 parts mix |
| TOTAL | 100.00 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the weight percent of the wheat protein isolate product preferably ranges from about 10 to about 17 based on the weight of the resistant starch product, and more preferably ranges from about 12 to about 15 based on the weight of the resistant starch product.

### PROCEDURE:

1) Take frozen fish fillet and dip in batter for 5 seconds.
2) Drain for 5-10 seconds and dip batter a second time.
3) Briefly drain excess and coat entire fish in breading.
4) Place breaded fillets in freezer overnight.
5) Take out of freezer and fry (5.5-6.0 minutes, 375°F).

### EXAMPLE 62

### REDUCED-CARBOHYDRATE CHICKEN BATTER

This Example involved the preparation by conventional procedures of a reduced carbohydrate chicken batter product. Among other things, the ingredients included a resistant starch product and a wheat protein isolate product. A full list of ingredients is set forth below:

| **Ingredients** | **% Batch** |
|---|---|
| FiberStar 70¹ | 33.4 |
| Arise^{™} 5000² | 4.6 |
| Corn Flour | 38.0 |
| Salt | 2.5 |
| Soda | 0.5 |
| SAP | 0.5 |
| Midsol 701 | 14.5 |
| Midsol 35 or Midset 30 | 5.0 |
| Spices | 1.0 |
| Water | 130 parts/100 parts mix |
| TOTAL | 100.00 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the percent of the resistant starch product preferably ranges from about 15 to about 50, and more preferably ranges from about 25 to about 40. For another example, the percent of the wheat protein isolate product preferably ranges from about 1 to about 10.

### PROCEDURE:

1) Dip in flour predust.
2) Dip in batter (3 seconds).
3) Par-fry 190°C, 30 seconds
4) Freeze overnight.
5) Take out of freezer and fry (240 seconds, 190°C).

### EXAMPLE 63

### REDUCED-CARBOHYDRATE FRENCH FRY BATTER

This Example involved the preparation by conventional procedures of a reduced carbohydrate french fry batter product. Among other things, the ingredients included a resistant starch product and a wheat protein isolate product. A full list of ingredients is set forth below:

| **Ingredients** | **% Batch** |
|---|---|
| FiberStar 70' | 13.2 |
| Arise^{™} 5000² | 1.8 |
| Midsol 1 | 49.2 |
| Midsol 35 | 30.1 |
| Salt | 4.0 |
| Soda | 0.3 |
| SAPP | 0.4 |
| Pregel 10 | 1.0 |
| Water | 140-160 parts/100 parts mix |
| TOTAL | 100.00 |

| | |
|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | |

The proportions and constituents of this mixture may be varied. For example, the weight percent of the wheat protein isolate product preferably ranges from about 10 to about 17 based on the weight of the resistant starch product, and more preferably ranges from about 12 to about 15 based on the weight of the resistant starch product.

### PROCEDURE:

1) Process potatoes into desired size and soak in 0.05-0.10 phosphate solution.
2) Potatoes are blanched @ 170-190°F for 8-10 minutes.
3) Potatoes are dried at about 175°F to 10-15 moisture loss in convection oven.
4) Potatoes are cooled, then dipped into batter to desired batter pickup and par fried for 45 seconds at 375°.
5) Place in freezer overnight.
6) Fry the potatoes at 350° for 2.5 minutes (time will vary depending on size).

### EXAMPLE 64

### REDUCED CARBOHYDRATE HAMBURGER BUN

This Example involved the preparation of a reduced carbohydrate hamburger bun by modifying the ingredients listed in Example 29. Compressed yeast was reduced from 36.7 to 24.5 baker's percent. L-cysteine was added at 0.027 baker's percent. Water was increased from 232.6 to 250.8 baker's percent. Among other things, the ingredients included a resistant starch product and a wheat protein isolate product.

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

### PROCEDURES:

1. Mix 1 minute at low speed.
2. Mix 8-10 minutes at high speed.
3. Divide and form into desired dough pieces
4. Proof at 100°-105°F / 75-85% R.H. for 45-55 minutes.
5. Bake at 425° F for 14 minutes.

### EXAMPLE 65

### REDUCED CARBOHYDRATE HOT DOG BUN

This Example involved the preparation of a reduced-carbohydrate hot dog bun by modifying the ingredients listed in Example 29. Compressed yeast was reduced from 36.7 to 24.5 baker's percent. L-cysteine was added at 0.027 baker's percent. Water was increased from 232.6 to 250.8 baker's percent. Among other things, the ingredients included a resistant starch product and a wheat protein isolate product.

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

### PROCEDURES:

1. Mix 1 minute at low speed. '
2. Mix 8-10 minutes at high speed.
3. Divide and form into desired dough pieces.
4. Proof at1000-1050F / 75-85% R.H. for 45-55 minutes.
5. Bake at 425° F for 14 minutes.

### EXAMPLE 66

### REDUCED CARBOHYDRATE DINNER ROLL

This Example involved the preparation of a reduced-carbohydrate dinner roll by modifying the ingredients listed in Example 29. Vegetable oil was increased from 18.4 to 30.6 baker's percent. Sucralose was increased from 0.024 to 0.050 baker's percent Water was reduced from 232.6 to 220.2 baker's percent. Among other things, the ingredients included a resistant starch product and a wheat protein isolate product.

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

### PROCEDURES:

1. Mix 1 minute at low speed.
2. Mix 8-10 minutes at high speed.
3. Divide and form into desired dough pieces.
4. Proof at 1000-1050F / 65-75% R.H. for 45-55 minutes.
5. Bake at 410° F for 20 minutes.

### EXAMPLE 67

### REDUCED CARBOHYDRATE ENGLISH MUFFIN

This Example involved the preparation of a reduced-carbohydrate English Muffin by modifying the ingredients listed in Example 29. Vegetable oil was reduced from 18.4 to 3.0 baker's percent. Calcium propionate was increased from 0.8 to 2.3 baker's percent. L-cysteine was added at 0.027 baker's percent. Both EMG (ethoxylated mono-diglycerides) and sodium stearoyl lactylate were deleted from the recipe. Water was increased from 232.6 to 275.2 baker's percent. Among other things, the ingredients included a resistant starch product and a wheat protein isolate product.

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

### PROCEDURES:

1 Mix 1 minute at low speed.
2 Mix 10-12 minutes at high speed.
3 Divide and form into desired dough pieces.
4 Proof at 1050-1100F / 85-90% R.H. for 35-45 minutes.
5 Bake at 4500 F for 8 minutes.

### EXAMPLE 68

### REDUCED CARBOHYDRATE SWEET ROLL

This Example involved the preparation of a reduced-carbohydrate sweet roll by modifying the ingredients listed in Example 29. Vegetable oil was increased from 18.4 to 36.8 baker's percent. Sucralose was increased from 0.024 to 0.050 baker's percent. Water was reduced from 232.6 to 183.5 baker's percent. Among other things, the ingredients included a resistant starch product and a wheat protein isolate product.

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

### PROCEDURES:

1 Mix 1 minute at low speed.
2 Mix 10-12 minutes at high speed.
3 Use the dough to make desired sweet roll products.
4 Proof at 900-950F / 75-85% R.H. for 35-45 minutes.
5 Bake at 4000 F for 13-15 minutes.

### EXAMPLE 69

### REDUCED CARBOHYDRATE BREAD CRUMB (AMERICAN OR JAPANESE)

This Example involved the preparation of a reduced-carbohydrate bread crumb (American or Japanese) using the ingredients listed in Example 29. Among other things, the ingredients included a resistant starch product and a wheat protein isolate product. A full list of ingredients is set forth in Example 29.

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

The bread crumb was made by conventional procedures for making bread crumb. The following general procedures were followed using the ingredients listed in Example 29:
1. Mix 1 minute low speed, then mix 5 minutes high speed.
2. Dough temperature - 76°F, Pan dough scaling factor: 2.00.
3. Proof 1 hour - 112/108°F.
4. Bake at 410°F for 24 minutes (American bread crumb) or in an electrical resistance oven (Japanese bread crumb)
5. Cut the bread into cubes.
6. Grind the cubes in a food processor into bread crumb size.
7. Dry the bread crumbs in an oven to less than 10% moisture.

### EXAMPLE 70

### REDUCED CARBOHYDRATE CROUTON

This Example involved the preparation of a reduced-carbohydrate crouton using the ingredients listed in Example 29. Among other things, the ingredients included a resistant starch product and a wheat protein isolate product. A full list of ingredients is set forth in Example 29.

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

The crouton was made by conventional procedures for making crouton. The following general procedures were followed using the ingredients listed in Example 29:
1. Mix 1 minute low speed, then mix 5 minutes high speed.
2. Dough temperature - 76°F, Pan dough scaling factor: 2.00.
3. Proof 1 hour - 112/108°F.
4. Bake at 410°F for 24 minutes
5. Cut the bread, and dice it into cubes of crouton size.
6. The diced cubes are toasted into croutons.

### EXAMPLE 71

### REDUCED CARBOHYDRATE WHITE BREAD

This Example involved the preparation of reduced carbohydrate white bread. Among other things, the ingredients included a resistant starch product and a wheat protein isolate product. A full list of ingredients is set forth below:

| **Ingredients** | **Supplier** | **Weight % (Flour Weight Basis)** |
|---|---|---|
| Bread Flour | | 100.0 |
| Arise 5000 | MGP Ingredients | 36.0 |
| Vital Wheat Gluten | | 60.0 |
| FiberStar 70¹ | MGP Ingredients | 70.0 |
| FI-1 Soy Fiber | Fibred | 40.0 |
| Yeast | | 24.5 |
| Vegetable Oil | | 18.4 |
| Carb Magic | American Ingredients Co. | 7.6 |
| Salt | | 5.8 |
| Calcium Propionate | | 1.1 |
| Water (Variable) | | 238.7 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

The bread was made by conventional procedures for baking bread. The following general procedures were followed:
1. Blend dry ingredients for 1 minute.
2. Add remaining ingredients.
3. Mix 1 minute at low speed.
4. Mix 5-7 minutes at high speed.
5. Desired dough temperature: 76°-78° F.
6. Proof at 110°/106°F for 55 minutes.
7. Bake at 425° F for 23 minutes.

### EXAMPLE 72

### REDUCED CARBOHYDRATE WHOLE WHEAT BREAD

This Example involved the preparation of reduced carbohydrate whole wheat bread. Among other things, the ingredients included a resistant starch product and a wheat protein isolate product. A full list of ingredients is set forth below:

| **Ingredients** | **Supplier** | **Weight % (Flour Weight Basis)** |
|---|---|---|
| Whole Wheat Flour | | 100.0 |
| Arise 5000 | MGP Ingredients | 36.0 |
| Vital Wheat Gluten | | 60.0 |
| FiberStar 70¹ | MGP Ingredients | 70.0 |
| FI-1 Soy Fiber | Fibred | 40.0 |
| Yeast | | 24.5 |
| Vegetable Oil | | 18.4 |
| Carb Magic | American Ingredients Co. | 7.6 |
| Salt | | 5.8 |
| Calcium Propionate | | 1.1 |
| Water (Variable) | | 238.7 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 50 to about 90, and more preferably ranges from about 60 to about 80. For another example, the baker's percent of the wheat protein isolate product preferably ranges from about 20 to about 60.

The whole wheat bread was made by conventional procedures for baking whole wheat bread.

The following general procedures were followed:
1. Blend dry ingredients for 1 minute.
2. Add remaining ingredients.
3. Mix 1 minute at low speed.
4. Mix 5-7 minutes at high speed.
5. Desired dough temperature: 76°-78° F.
6. Proof at 110°/106°F for 55 minutes.
7. Bake at 425° F for 23 minutes.

### EXAMPLE 73

### REDUCED CARBOHYDRATE HEARTH BREAD/HOAGIE BUN

This Example involved the preparation of reduced carbohydrate hearth bread/hoagie bun. Among other things, the ingredients included a resistant starch product and a wheat protein isolate product. A full list of ingredients is set forth below:

| **Ingredients** | **Supplier** | **Weight % (Flour Weight Basis)** |
|---|---|---|
| Bread Flour | | 100.0 |
| Vital Wheat Gluten | | 75.0 |
| Arise 5000 | MGP Ingredients | 25.0 |
| FiberStar 70¹ | MGP Ingredients | 75.0 |
| Cottonseed Fiber | Fibred | 37.5 |
| Carb Magic | American Ingredients Co. | 3.1 |
| Salt | | 6.2 |
| Yeast | | 9.4 |
| Vegetable Oil | | 9.4 |
| Water | | 218.8 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 50 to about 100, and more preferably ranges from about 60 to about 90. For another example, the baker's percent of the wheat protein isolate product preferably ranges from about 10 to about 40.
1. The hearth bread/hoagie bun was made by conventional G105
2. Add remaining ingredients.
3. Mix 1 minute at low speed.
4. Mix 7-10 minutes at high speed.
5. Desired dough temperature: 75°-77° F.
6. Process dough like normal hearth bread or hoagie bun.
7. Proof at 100°/105°F and 65% R.H. for 55-65 minutes.
8. Bake at 425° F for 21-23 minutes with steam at the beginning of bake.

### EXAMPLE 74

### REDUCED CARBOHYDRATE PIZZA CRUST

This Example involved the preparation of reduced carbohydrate pizza crust. Among other things, the ingredients included a resistant starch product and a wheat protein isolate product. A full list of ingredients is set forth below:

| **Ingredients** | **Supplier** | **Weight % (Flour Weight Basis)** |
|---|---|---|
| Bread Flour | | 100.0 |
| Arise 5000 | MGP Ingredients | 40.0 |
| Vital Wheat Gluten | | 66.7 |
| FiberStar 70¹ | MGP Ingredients | 93.3 |
| FI-1 Soy Fiber | Fibred | 33.3 |
| Yeast | | 3.3 |
| Vegetable Oil | | 6.7 |
| Carb Magic | American Ingredients Co. | 8.3 |
| Salt | | 6.7 |
| Calcium Propionate | | 0.8 |
| Water (Variable) | | 240.0 |
| Dough Relaxer (L-Cysteine Protease, Sulfite) | (Add to obtain desired dough consistency) | Variable |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 70 to about 110, and more preferably ranges from about 80 to about 100. For another example, the baker's percent of the wheat protein isolate product preferably ranges from about 20 to about 60.

The pizza crust was made by conventional procedures for baking pizza crust.

The following general procedures were followed:
1. Blend dry ingredients for 1 minute at low speed.
2. Add remaining ingredients.
3. Mix 1 minute at low speed.
4. Mix 6-8 minutes at high speed or until desired dough consistency.
5. Desired dough temperature: 75°-77° F.
6. Allow little or no floor time for best dough machinability.
7. Form desired dough balls, and sheet or press to desired shape.
8. If proofing or baking dough, handle like normal pizza dough.

### EXAMPLE 75

### REDUCED CARBOHYDRATE BAGEL

This Example involved the preparation of reduced carbohydrate bagel. Among other things, the ingredients included a resistant starch product and a wheat protein isolate product. A full list of ingredients is set forth below:

| **Ingredients** | **Supplier** | **Weight % (Flour Weight Basis)** |
|---|---|---|
| Bread Flour | | 100.0 |
| Vital Wheat Gluten | | 66.6 |
| Arise 5000 | MGP Ingredients | 33.3 |
| FiberStar 70¹ | MGP Ingredients | 100.0 |
| Inulin | Sensus | 33.3 |
| Compressed Yeast | | 6.7 |
| Salt | | 6.7 |
| Water | | 226.4 |
| Vegetable Oil | | 13.3 |
| Calcium Propionate | | 1.2 |
| Carb Magic | American Ingredients Co. | 3.3 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 80 to about 120, and more preferably ranges from about 90 to about 110. For another example, the baker's percent of the wheat protein isolate product preferably ranges from about 20 to about 50.

The bagel was made by conventional procedures for baking bagel.

The following general procedures were followed:
1. Blend dry ingredients for 1 minute at low speed.
2. Add remaining ingredients.
3. Mix 1 minute at low speed.
4. Mix 5-7 minutes at high speed.
5. No floor time. Process like a normal bagel.
6. Proof at 95°-100°F and 75% R.H. for 45-50 minutes.
7. Bake at 425°F for 16-17 minutes.

### EXAMPLE 76

### REDUCED CARBOHYDRATE YEAST RAISED DONUT

This Example involved the preparation of reduced carbohydrate yeast raised donut. Among other things, the ingredients included a resistant starch product and a wheat protein isolate product. A full list of ingredients is set forth below:

| **Ingredients** | **Supplier** | **Weight % (Flour Weight Basis)** |
|---|---|---|
| Bread Flour | | 100.0 |
| Vital Wheat Gluten | | 25.0 |
| Arise 5000 | MGP Ingredients | 25.0 |
| FiberStar 70¹ | MGP Ingredients | 75.0 |
| FI-1 Soy Fiber | Fibred | 25.0 |
| Salt | | 4.4 |
| Soybean Oil | | 30.0 |
| Eggs | | 25.0 |
| NFDM | | 12.5 |
| Sodium Acid Pyrophosphate | | 1.0 |
| Sodium Bicarbonate | | 0.7 |
| Calcium Propionate | | 0.6 |
| Compressed Yeast | | 11.2 |
| Water (Variable) | | 155.0 |
| Inulin | Senus | 12.5 |
| Baker's Emplex Supreme | American Ingredients Co. | 0.6 |
| Carb Magic | American Ingredients Co. | 6.2 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 50 to about 100, and more preferably ranges from about 60 to about 90. For another example, the baker's percent of the wheat protein isolate product preferably ranges from about 10 to about 40.

The yeast raised donut was made by conventional procedures for making yeast raised donut.

The following general procedures were followed:
1. Blend dry ingredients for 1 minute.
2. Add remaining ingredients.
3. Mix 4-6 minutes.
4. Proof 108°/102°F for 30 minutes.
5. Fry 45 seconds/side at 375°F.

### EXAMPLE 77

### REDUCED CARBOHYDRATE FLOUR TORTILLA

This Example involved the preparation of reduced carbohydrate flour tortilla. Among other things, the ingredients included a resistant starch product and a wheat protein isolate product. A full list of ingredients is set forth below:

| **Ingredients** | **Supplier** | **Weight % (Flour Weight Basis)** |
|---|---|---|
| Tortilla Flour | | 100.0 |
| Vital Wheat Gluten | | 75.0 |
| FiberStar 70¹ | MGP Ingredients | 275.0 |
| Arise 5000 | MGP Ingredients | 50.0 |
| Sodium Acid Pyrophosphate | Astaris | 5.5 |
| Sodium Bicarbonate | Church & Dwight Co. | 4.2 |
| Calcium Propionate | | 3.8 |
| Salt | | 8.8 |
| Alphadim 90 | American Ingredients Co. | 3.2 |
| Vegetable Shortening | | 60.0 |
| Fumaric Acid | | 0.5 |
| Potassium Sorbate | | 0.2 |
| Water (Variable) | | 300.0 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 200 to about 350, and more preferably ranges from about 250 to about 300. For another example, the baker's percent of the wheat protein isolate product preferably ranges from about 40 to about 60.

The flour tortilla was made by conventional procedures for baking flour tortilla.

The following general procedures were followed:
1. Blend dry ingredients for 1 minute at low speed.
2. Add liquid ingredients.
3. Mix 1 minute at low speed.
4. Mix 6 minutes at high speed or until optimum development.
5. Process like a typical flour tortilla.

### EXAMPLE 78

### REDUCED CARBOHYDRATE ANGEL FOOD CAKE

This Example involved the preparation of reduced carbohydrate angel food cake. Among other things, the ingredients included a resistant starch product and a wheat protein isolate product. A full list of ingredients is set forth below:

| **Ingredients** | **Supplier** | **Weight % (Flour Weight Basis)** |
|---|---|---|
| **1^{st} Stage** | | |
| 1. Water | | 454.5 |
| 2. Maltitol | SPI Polyols | 210.9 |
| 3. Erythritol | Cargill | 82.4 |
| 4. Inulin | Sensus | 6.1 |
| 5. Monocalcium Phosphate | | 7.6 |
| 6. Salt | | 7.6 |
| 7. Egg Whites | Henningsen | 78.8 |
| 8. Vanilla Supreme | International Bakers Services | 1.7 |
| **2^{nd} Stage** | | |
| 9. Cake Flour | | 100.0 |
| 10. Arise 5000 | MGP Ingredients | 9.1 |
| 11. FiberStar 70' | MGP Ingredients | 50.9 |
| 12. Midsol 50 | MGP Ingredients | 36.4 |
| 13. Polydextrose | Tate & Lyle | 26.7 |
| 14. Monocalcium Phosphate | | 9.1 |
| 15. Baking Soda | | 8.5 |
| 16. Acesulfame K | Nutrinova | 0.23 |
| 17. Sucralose | Tate & Lyle | 0.16 |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the baker's percent of the resistant starch product preferably ranges from about 30 to about 70, and more preferably ranges from about 40 to about 60. For another example, the baker's percent of the wheat protein isolate product preferably ranges from about 5 to about 15.

The angel food cake was made by conventional procedures for baking angel food cake.

The following general procedures were followed:
1. Blend dry ingredients from 1^{st} stage and add to water.
2. Mix at low speed for 30 seconds.
3. Mix at medium speed until desired specific gravity.
4. Add 2^{nd} stage ingredients that have been preblended slowly at low speed until all ingredients become moist.
5. Scale desired amount according to pan size.
6. Bake as required at 375°F.

### EXAMPLE 79

### REDUCED CARBOHYDRATE PANCAKE/WAFFLE

This Example involved the preparation of reduced carbohydrate pancake/waffle. Among other things, the ingredients included a resistant starch product and two wheat protein isolate products. A full list of ingredients is set forth below:

| **Ingredients** | **Supplier** | **% Batch** |
|---|---|---|
| **Step 1** | | |
| 1. All Purpose Shortening | | 4.15 |
| 2. Erythritol | Cargill | 2.30 |
| 3. Isomalt | Palatinit | 2.30 |
| 4. Salt | | 0.69 |
| 5. Acesulfame K | Nutrinova | 0.006 |
| 6. Sucralose | Tate & Lyle | 0.004 |
| **Step 2** | | |
| 7. FiberStar 80 ST¹ | MGP Ingredients | 24.88 |
| 8. Arise 8000 | MGP Ingredients | 4.42 |
| 9. Nonfat Dry Milk | | 2.76 |
| 10. Whey Protein Isolate-BiPRO | Davisco | 1.38 |
| 11. Baking Powder-Double Acting | | 1.01 |
| 12. Potato Starch | | 0.92 |
| 13. Inulin | Sensus | 0.46 |
| 14. Arise 5000 | MGP Ingredients | 0.46 |
| 15. B&V Flavor | International Bakers Services | 0.18 |
| 16. Xanthan Gum | | 0.13 |
| **Step 3** | | |
| 17. Water | | 33.18 |
| 18. Whole Eggs | | 16.13 |
| 19. Soy Oil | | 4.61 |
| Total | | 100.0% |

| | | |
|---|---|---|
| ¹ FiberStar 80 ST is produced from potato starch according to USP 5,855,946. Other resistant starches made from potato starch according to USP 6,299,907 may be used, as may (for example) resistant starches made according to either of these two patents from wheat, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the percent of the resistant starch product preferably ranges from about 15 to about 40, and more preferably ranges from about 20 to about 30. For another example, the percent of the first wheat protein isolate product preferably ranges from about 2 to about 10 and the second wheat protein isolate product preferably ranges from about 0.1 to 1.0.

The pancake/waffle was made by conventional procedures for making pancake/waffle.

The following general procedures were followed:
1. Dry blend step 1 ingredients together on low speed.
2. Weigh step 2 ingredients and slowly add to step 1 ingredients while mixing on low speed until well blended.
3. In large bowl combine mix blended from step 2 with water, oil and eggs from step 3.
4. Stir until smooth and large lumps disappear.
5. Pour measured amount of batter in a griddle set at 3750F to prepare the pancake, or in a household waffle machine to prepare the waffle.

### EXAMPLE 80

### REDUCED CARBOHYDRATE PECAN SHORTBREAD COOKIE

This Example involved the preparation of reduced carbohydrate pecan shortbread cookie. Among other things, the ingredients included a resistant starch product and a wheat protein isolate product. A full list of ingredients is set forth below:

| **Ingredients** | **Supplier** | **% Batch** |
|---|---|---|
| 1. FiberStar 70¹ | MGP Ingredients | 36.08 |
| 2. Arise 8000 | MGP Ingredients | 4.18 |
| 3. Litesse II | Danisco | 0.51 |
| 4. Baking Soda | | 0.44 |
| 5. Cream of Tartar | | 0.42 |
| 6. Acesulfame K | Nutrinova | 0.02 |
| 7. Sucralose (Splenda) | Tate and Lyle | 0.01 |
| 8. Xanthan Gum | TIC Gums | 0.31 |
| 9. All Purpose Shortening | | 23.15 |
| 10. Isomalt | Palatinit | 22.07 |
| 11. Liquid Whole Egg | | 5.10 |
| 12. Single Fold Pure Vanilla Extract | Dawn Food Products | 0.44 |
| 13. Artificial Almond Flavoring | McCormick | 0.44 |
| 14. Chopped Pecans | | 6.83 |
| Total | | 100% |

| | | |
|---|---|---|
| ¹ FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the percent of the resistant starch product preferably ranges from about 20 to about 60, and more preferably ranges from about 30 to about 50. For another example, the percent of the wheat protein isolate product preferably ranges from about 1 to about 8.

The pecan shortbread cookie was made by conventional procedures for baking pecan shortbread cookie.

The following general procedures were followed:
1. Blend ingredients 1-8 together.
2. In separate bowl cream ingredients 9 and 10.
3. Add ingredients 11, 12 and 13 to creamed mixture and mix until well blended.
4. Slowly add step 1 to blended steps 2 and 3. Mix for 3 minutes.
5. Add chopped pecans and mix together.
6. Scale dough into 30g balls.
7. Bake at 350°F for 10-13 minutes in a convection oven.

### EXAMPLE 81

### REDUCED CARBOHYDRATE LEMON POPPY SEED MUFFIN

This Example involved the preparation of reduced carbohydrate lemon poppy seed muffin. Among other things, the ingredients included a resistant starch product and a wheat protein isolate products. A full list of ingredients is set forth below:

| **Ingredients** | **Supplier** | **% Batch** |
|---|---|---|
| 1. Water | | 24.07 |
| 2. FiberStar 80 ST¹ | MGP Ingredients | 17.71 |
| 3. Soybean Oil | | 12.36 |
| 4. Isomalt | Palatinit | 11.35 |
| 5. Erythritol | Cargill | 11.35 |
| 6. Powdered Whole Eggs | | 5.90 |
| 7. Arise 8000 | MGP Ingredients | 5.56 |
| 8. White Plume Cake Shortening | Bunge Foods | 3.41 |
| 9. Poppy Seeds | | 1.85 |
| 10. Nonfat Dry Milk-high heat | | 1.82 |
| 11. Whey Protein Isolate | | 1.36 |
| 12. Potato Starch | | 0.68 |
| 13. Salt | | 0.43 |
| 14. Soda | | 0.41 |
| 15. Sodium Acid Pyrophosphate | | 0.50 |
| 16. Lemon & Vanilla 16 to 1 | International Bakers Services | 0.34 |
| 17. Baking Powder | | 0.32 |
| 18. Sodium Stearoyl Lactylate | American ingredients | 0.18 |
| 19. Xanthan Gum | | 0.18 |
| 20. Monocalcium Phosphate | Rhodia | 0.07 |
| 21. Acesulfame K | Nutrinova | 0.019 |
| 22. Sucralose (Splenda) | Splenda McNeil Nutritionals | 0.013 |
| Total | | 100.0% |

| | | |
|---|---|---|
| ¹ FiberStar 80 ST is produced from potato starch according to USP 5,855,946. Other resistant starches made from potato starch according to USP 6,299,907 may be used, as may (for example) resistant starches made according to either of these two patents from wheat, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the percent of the resistant starch product preferably ranges from about 5 to about 30, and more preferably ranges from about 12 to about 22. For another example, the percent of the wheat protein isolate product preferably ranges from about 2 to about 10.

The lemon poppy seed muffin was made by conventional procedures for baking lemon poppy seed muffin.

The following general procedures were followed:
1. Blend cake shortening-sucrose-salt together.
2. Blend all other dry ingredients to above.
3. Add 1st addition water (14.81%) and oil to blended muffin mix and mix 1 minute on 1 st speed.
4. Mix 2 minutes on 2nd speed.
5. Add 2nd addition water (9.26%), and mix 1 minute on 1st speed.
6. Scrape bowl and mix 2 minutes on 1 st speed.
7. Add poppy seeds and fold in.
8. Scale for small muffins 62g +/-2g or 122g +/-2g for large muffins.
9. Bake at 3750F for 20-22 minutes for small muffins or 30-33 minutes for large muffins.

### EXAMPLE 82

### REDUCED CARBOHYDRATE TORTILLA CHIP

This Example involved the preparation of a reduced carbohydrate tortilla chip using five formulas. Among other things, the ingredients included a resistant starch product and a wheat protein isolate product. A full list of ingredients is set forth below:

| **Ingredients** | **% Batch** | | | | |
|---|---|---|---|---|---|
| Corn Masa | 100 | 75 | 50 | 75 | 50 |
| FiberStar 80 ST¹ | 0 | 25 | 50 | 23 | 46 |
| Arise 5000² | 0 | 0 | 0 | 2 | 4 |

| | | | | | |
|---|---|---|---|---|---|
| ¹ Available from MGP Ingredients. FiberStar 80 ST is produced from potato starch according to USP 5,855,946. Other resistant starches made from potato starch according to USP 6,299,907 may be used, as may (for example) resistant starches made according to either of these two patents from wheat, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | | | | | |

The proportions and constituents of this mixture may be varied. For example, the percent of the resistant starch product preferably ranges from about 5 to about 75, and more preferably ranges from about 20 to about 55. For another example, the percent of the wheat protein isolate product preferably ranges from about 0 to about 6.

The tortilla chip was made by conventional procedures for making tortilla chip.
1. The following general procedures were followed:
2. Mix dry ingredients and water to form a dough.
3. Flatten the dough into disks (∼0.10 inch thick)
4. Cut the disks into wedge-shaped chips.
5. Bake at 5750-6000F for 15-30 seconds.
6. Pass through an equilibrator to allow moisture to evaporate or migrate evenly.
7. Fry at 3650-390°F for 60 seconds, or bake in a zone oven (300°F) with recirculating air for 10-15 minutes.
8. Add salt and seasoning to flavor the tortilla chips.

### EXAMPLE 83

### REDUCED CARBOHYDRATE CHINESE NOODLE

This Example involved the preparation of reduced carbohydrate Chinese noodle using five formulas. Among other things, the ingredients included a resistant starch product and a wheat protein isolate product. A full list of ingredients is set forth below:

| **Ingredients** | **Weight % (Flour Weight Basis)** | | | | |
|---|---|---|---|---|---|
| Wheat Flour | 100.0 | 100.0 | 100.0 | 100.0 | 100.0 |
| FiberStar 70¹ | 0 | 38.6 | 90.0 | 210.0 | 810.0 |
| Arise 8000² | 0 | 4.3 | 10.0 | 23.3 | 90.0 |
| Water | 32.0 | 45.7 | 64.0 | 106.7 | 320.0 |
| Salt | 1.0 | 1.4 | 2.0 | 3.3 | 10.0 |
| Potassium Carbonate | 0.6 | 0.9 | 1.2 | 2.0 | 6.0 |
| Sodium Carbonate | 0.4 | 0.6 | 0.8 | 1.3 | 4.0 |

| | | | | | |
|---|---|---|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | | | | | |

The proportions and constituents of this mixture may be varied. For example, the baker's percent of the resistant starch product preferably ranges from about 10 to about 900, and more preferably ranges from about 30 to about 820. For another example, the baker's percent of the wheat protein isolate product preferably ranges from about 2 to about 95.

The Chinese noodle was made by conventional procedures for making Chinese noodle.

The following general procedures were followed:
1. Mix dry ingredients.
2. Add water with pre-dissoived salt, potassium carbonate, and sodium carbonate.
3. Mix for 10 minutes.
4. Using a noodle machine, compress the dough between two pairs of rolls at 5 mm gap.
5. Rest the dough for 30 minutes.
6. Pass the dough sheet through four times with progressively reducing roll gaps of 4, 3, 2, and 1.5 mm.
7. Finally, pass through a roll gap of 1.4 mm.
8. Cut the dough sheet into strips (1.5 mm wide) with a #20 square type cutter, and with a length of 25 cm.

### EXAMPLE 84

### REDUCED CARBOHYDRATE SALT NOODLE

This Example involved the preparation of reduced carbohydrate salt noodle using five formulas. Among other things, the ingredients included a resistant starch product and a wheat protein isolate product. A full list of ingredients is set forth below:

| **Ingredients** | **Weight % (Flour Weight Basis)** | | | | |
|---|---|---|---|---|---|
| Wheat Flour | 100.0 | 100.0 | 100.0 | 100.0 | 100.0 |
| FiberStar 70¹ | 0 | 38.6 | 90.0 | 210.0 | 810.0 |
| Arise 8000² | 0 | 4.3 | 10.0 | 23.3 | 90.0 |
| Salt | 2.0 | 2.9 | 4.0 | 6.7 | 20.0 |

| | | | | | |
|---|---|---|---|---|---|
| ¹ Available from MGP Ingredients. FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystailization), heat moisture treatment, partial gelatinization, annealing, and roasting; 3) genetic modifications including gene or chromosome engineering, such as cross-breeding, translocation, inversion and transformation; and 4) combinations of the above. ² Available from MGP Ingredients. | | | | | |

The proportions and constituents of this mixture may be varied. For example, the baker's percent of the resistant starch product preferably ranges from about 10 to about 900, and more preferably ranges from about 30 to about 820. For another example, the baker's percent of the wheat protein isolate product preferably ranges from about 2 to about 95.

The salt noodle was made by conventional procedures for making salt noodle.

The following general procedures were followed:
1. Mix dry ingredients.
2. Add water with pre-dissolved salt.
3. Mix for 10 minutes.
4. Using a noodle machine, compress the dough between two pairs of rolls at 5 mm gap.
5. Rest the dough for 30 minutes.
6. Pass the dough sheet through four times with progressively reducing roll gaps of 4, 3, 2, and 1.5 mm.
7. Finally, pass through a roll gap of 1.4 mm.
8. Cut the dough sheet into strips (1.5 mm wide) with a #20 square type cutter, and with a length of 25 cm.

### EXAMPLE 85

### REDUCED CARBOHYDRATE ICE CREAM

This Example involved the preparation of a reduced carbohydrate ice cream. Among other things, the ingredients included a resistant starch product. A full list of ingredients is set forth below:

| **Ingredients** | **Supplier** | **% Batch** |
|---|---|---|
| Whole Milk | Roberts Dairy | 57.60 |
| Cream (40%) | Roberts Dairy | 22.50 |
| Sucrose | Best Choice | 10.00 |
| Corn Syrup Solids (36 DE) | Cerestar USA | 4.50 |
| Non Fat Dry Milk | Best Choice | 3.00 |
| FiberStar 70¹ | MGP Ingredients | 2.00 |
| Stabilizer - Emulsifier Blend | Continental Colloids | 0.40 |
| Annatto Color | Chr. Hansen | 0.25 ml/ 1000g |
| Vanilla Flavor (4x) | Danisco | 2.5 ml/ 1000g |
| TOTAL | | 100.00 |

| | | |
|---|---|---|
| ¹FiberStar 70 is produced from wheat starch according to USP 5,855,946. Other resistant starches made from wheat starch according to USP 6,299,907 may be used, as may (for example) resistant starches made according to either of these two patents from potato, corn, tapioca, rice, sago, sweet potato, mungbean, oat, barley, rye, triticale, sorghum, banana, and other botanical sources, including waxy, partial waxy, and high-amylose variants ("waxy" being intended to include at least 95 % by weight amylopectin and high amylose at least about 40 % by weight amylose). Chemically, physically or genetically modified forms of these starches can also be used. Modification techniques include 1) treatment with chemicals and/or enzymes according to 21 CFR 172.892; 2) physical associations such as retrogradation (recrystallization), heat moisture treatment, partial gelatinization, annealing, and roasting; 3) genetic modifications including gene or chromosome engineering, such as cross-breeding, translocation, inversion and transformation; and 4) combinations of the above. | | |

The proportions and constituents of this mixture may be varied. For example, the percent of the resistant starch product preferably ranges from about 0.5 to about 5.0, and more preferably ranges from about 1 to about 3.

### PROCEDURES:

1. Blend dry ingredients.
2. Add dry ingredients to luke warm milk (110°F) while constantly agitating.
3. Heat up to 140°F and homogenize at 2000 psi (1^{st} stage) and 500 psi (2^{nd} stage).
4. Pasteurize up to 180°F for 25 sec.
5. Cool to 40°F. Add color and flavor: Mix well.
6. Freeze till draw temperature reaches 21-22°F or ∼100% overrun.
7. Pack in cups.
8. Transfer for hardening at -130 to -19°F for 24 hours.

## Claims

1. A wheat flour containing bakery product comprising:
from 5-60 baker's percent of a first proteinaceous ingredient comprising at least 70% by weight protein; a second proteinaceous ingredient different from the first ingredient selected from the group consisting of
(a) between 0.5-100 baker's percent of a wheat protein isolate product comprising at least about 85% by weight protein;
(b) between 0.5-20 baker's percent of a fractionated wheat protein product comprising at least about 85% by weight protein;
(c) between 0.5-20 baker's percent of a deamidated wheat gluten product;
(d) any combination of ingredients (a)-(c), wherein said first proteinaceous ingredient is selected from the group consisting of vital wheat gluten, soy protein concentrate, soy protein isolate, whey protein, sodium caseinate, nonfat dry milk, dried egg whites, wheat protein isolate, wheat protein concentrate, devitalized wheat gluten, fractionated wheat protein, and deamidated wheat gluten.

2. The product of claim 1, said product being chemically leavened.

3. The product of claim 2, said product comprising a chemical leavening agent selected from the group consisting of sodium bicarbonate, monocalcium phosphate, sodium aluminum phosphate, sodium aluminum sulfate, sodium acid pyrophophate, dicalcium phosphate, potassium acid tartrate, and glucono-delta-lactone.

4. The product of claim 1, said product being yeast leavened.

5. The product of claim 4, said product having a total protein content from 5-35% by weight.

6. The product of claim 1, further comprising from 5-120 baker's percent of a resistant starch.

7. The product of claim 6, said resistant starch selected from the group consisting of physically inaccessible starch entrapped within a protein matrix or a plant cell wall, raw starch granules that resist digestion by alpha-amylase, retrograded amylose, and chemically modified starch.

## Patentansprüche

1. Weizenmehlhaltiges Bäckereiprodukt, das enthält:
von 5-60 Bäckerprozent einer ersten proteinösen Zutat mit wenigstens 70 Gew.-% Protein; eine zweite proteinöse Zutat, die unterschiedlich zu der ersten Zutat ist, aus der Gruppe ausgewählt, die besteht aus
(a) zwischen 0,5-100 Bäckerprozent eines Weizenproteinisolat-Produkts mit wenigstens etwa 85 Gew.-% Protein;
(b) zwischen 0,5-20 Bäckerprozent eines fraktionierten Weizenprotein-Produkts mit wenigstens etwa 85 Gew.-% Protein;
(c) zwischen 0,5-20 Bäckerprozent eines deamidierten Weizengluten-Produkts;
(d) einer beliebigen Kombination der Zutaten (a)-(c), wobei
die erste proteinöse Zutat aus der Gruppe ausgewählt ist, die aus Weizen-Vitalgluten, Sojaproteinkonzentrat, Sojaproteinisolat, Molkenprotein, Natriumcaseinat, Magermilchpulver, Trockeneiweiß, Weizenproteinisolat, Weizenproteinkonzentrat, devitalisiertem Weizengluten, fraktioniertem Weizenprotein und deamidiertem Weizengluten besteht.

2. Produkt nach Anspruch 1, wobei das Produkt durch ein chemisches Triebmittel gelockert wird.

3. Produkt nach Anspruch 2, wobei das Produkt ein chemisches Triebmittel aufweist, das aus der Gruppe ausgewählt ist, die aus Natriumbicarbonat, Monocalciumphosphat, Natrium-Aluminium-Phosphat, Natrium-Aluminium-Sulfat, Natrium-Säure-Pyrophosphat, Dicalciumphosphat, Kalium-Säure-Tartrat und Glucono-Delta-Lacton ausgewählt ist.

4. Produkt nach Anspruch 1, wobei das Produkt durch Hefe gelockert wird.

5. Produkt nach Anspruch 4, wobei das Produkt einen Gesamtproteingehalt von 5-35 Gew.-% aufweist.

6. Produkt nach Anspruch 1, das ferner von 5-120 Bäckerprozent einer resistenten Stärke aufweist.

7. Produkt nach Anspruch 6, wobei die resistente Stärke aus der Gruppe ausgewählt ist, die aus physikalisch nicht zugänglicher bzw. angreifbarer Stärke, die in einer Proteinmatrix oder einer Pflanzenzellwand eingebettet bzw. eingeschlossen ist, aus rohen Stärkekörnern, die einer Verdauung durch Alpha-Amylase widerstehen, aus retrograder Amylose und aus chemisch modifizierter Stärke besteht.

## Revendications

1. Produit de boulangerie contenant de la farine de froment comportant :
de 5 à 60 pour-cent de boulanger d'un premier ingrédient protéique comportant au moins 70 % en poids de protéine ;
un second ingrédient protéique différent du premier ingrédient étant choisi parmi le groupe constitué de
(a) entre 0,5 et 100 pour-cent de boulanger d'un produit d'isolat de protéine de froment comportant au moins environ 85 % en poids de protéine ;
(b) entre 0,5 et 20 pour-cent de boulanger d'un produit de protéine de froment fractionnée comportant au moins environ 85 % en poids de protéine ;
(c) entre 0,5 et 20 pour-cent de boulanger d'un produit de gluten de froment désamidé ;
(d) une combinaison quelconque des ingrédients (a) à (c), dans lequel ledit premier ingrédient protéique est choisi parmi le groupe constitué de gluten de froment élastique ou vital, de concentré de protéine de soja, d'isolat de protéine de soja, de protéine lactosérique, de caséinate de sodium, de lait sec dégraissé, de blancs d'oeuf en poudre, d'isolat de protéine de froment, de concentré de protéine de froment, de gluten de froment désactivé ou devitalisé, de protéine de froment fractionnée et de gluten de froment désamidé.

2. Produit selon la revendication 1, la levée dudit produit étant réalisée chimiquement.

3. Produit selon la revendication 2, ledit produit comportant un agent levant chimique choisi parmi le groupe constitué de bicarbonate de sodium, de phosphate monocalcique, de phosphate d'aluminium sodique, de sulfate d'aluminium sodique, de pyrophosphate acide de sodium, de phosphate dicalcique, de tartrate acide de potassium et de glucono-delta-lactone.

4. Produit selon la revendication 1, la levée dudit produit étant réalisée avec de la levure.

5. Produit selon la revendication 4, ledit produit ayant une teneur totale en protéine de 5 à 35 % en poids.

6. Produit selon la revendication 1, comportant en outre de 5 à 120 pour-cent de boulanger d'un amidon résistant.

7. Produit selon la revendication 6, ledit amidon résistant étant choisi parmi le groupe constitué d'amidon physiquement inaccessible occlus à l'intérieur d'une matrice de protéine ou d'une paroi de cellule végétale, de granules d'amidon brut qui résistent à la digestion par l'alpha-amylase, d'amylose rétrogradée et d'amidon chimiquement modifié.
